# EUROPEAN PATENT APPLICATION

(11) **EP 4 470 743 A2**
(43) Date of publication of application: **04.12.2024**
(21) Application number: 24178762.1
(22) Date of filing: 29.05.2024
(51) Int. Cl.: B29C 45/02, B22D 17/00, B22D 17/20, B29C 45/26, H02K 15/02, B22D 19/00, B29L 31/08, B29L 31/34, B29L 31/00, B29C 45/14

(54) **INJECTION MOULDING APPARATUS AND METHOD**

(30) Priority: 30.05.2023 IT 202300010935
(71) Applicant: Cannon Ergos S.P.A., 20121 Milan (IT)
(72) Inventor: VOLPATO, Marco, 20121 Milano (IT); BRESSAN, Marco, 20091 Bresso (MI) (IT); ANDOLFATTO, Mattia, 21048 Solbiate Arno (VA) (IT); CORTI, Maurizio, 20121 Milano (IT)
(74) Representative: Luppi Intellectual Property S.r.l.

(57) **Abstract**

Herein described is an injection moulding apparatus (1; 1'; 1") for manufacturing a product (2) by injecting liquid or semiliquid material that is intended to solidify, including two half-moulds (6, 7; 6', 7'; 6", 7") defining a moulding cavity (12; 12'; 12"). A half-mould (7; 7'; 7") includes: a central moulding body (8a, 8b; 8a', 8b'; 8a", 8b") extending along a longitudinal axis (X), hollow moulding means (9a, 9b; 9a', 9b'; 9a", 9b") arranged around the central moulding body (8a, 8b; 8a', 8b'; 8a", 8b") and defining together with the latter an annular supply gap (11; 11'; 11") suitable to receive the material to be supplied in the moulding cavity (12; 12'; 12"), and a sleeve body (10a; 10a'; 10a") movable in the annular supply gap (11; 11'; 11") and configured to transfer the material from the annular supply gap (11; 11'; 11") to the moulding cavity (12; 12'; 12").

Furthermore, herein described is an injection moulding method.

## Description

### Background of the invention

The invention relates to an apparatus and a method for manufacturing a product by injecting a liquid or semiliquid material that is intended to solidify to form a compound product.

Specifically but not exclusively, the apparatus and the method according to the invention may be used for moulding compound items by injecting molten aluminium or injecting thermosetting reactive resins.

Specifically but not exclusively, the apparatus and the method of the invention may be used for components of electric motors, such as electric motors which include stacked strips joined with aluminium or with thermosetting resins, such as for example squirrel-cage rotors (also referred to as short-circuit rotors) for electric motors, rotors for magnetic reluctance electric motors, or stators for electric motors to be equipped with coils.

### State of the art

Apparatuses and methods for producing compound products by injecting a liquid or semiliquid material that is intended to solidify are known. Obtaining a body, in particular a rotor cage, by injecting such liquid or semiliquid material, such as for example molten metal, such as aluminium, in a moulding cavity in which there is previously positioned a plate pack, to obtain such rotor cage, is also known. A piston is actuated by pushing a dosed amount of molten aluminium in the aforementioned moulding cavity defined by two half-moulds and in which the plate pack mentioned above is positioned, the half-moulds are closed by an actuation structure which provides for maintaining mutual clamping. The molten aluminium is introduced at an area of the moulding cavity intended to define a short circuit ring (which is part of the rotor cage).

Furthermore, apparatuses and methods for producing compound products by injecting a thermosetting reactive resin in half-moulds, are known. In particular, an epoxy liquid resin is introduced at an area of the moulding cavity, the resin is intended to flow into cavities present in the rotor cage of magnetic reluctance motors or in cavities which separate the poles of the triangular or pseudo-triangular-shaped stator coils of brushless flat motors.

The German patent application DE102020211765A1 discloses a device and a method for the vertical die-casting of a rotor for an asynchronous motor.

The United States patent US4337817A discloses a method for joining an element to a die-cast article, in which the die-cast article winds such element in the die-casting.

A limit of the prior art moulding systems lies in the fact that the amount of metal material used for the impregnation moulding of the die-cast product is not sufficiently optimised.

Another limit of the prior art moulding systems lies in the fact that the amount of metal material used for moulding the die-cast product is not sufficiently well distributed within a moulding cavity and in the ducts for supplying the material.

Another limit lies in the fact that the removal of the die-cast product from the half-moulds is not satisfactorily easy and it entails a period of stay of the product in the moulding cavity that is much longer than the time strictly required to complete an injection cycle by die-casting or by impregnating with thermosetting reactive resins; in this manner, the production yield of the moulding apparatus does not meet the market needs.

A further disadvantage lies in the poor adaptability/versatility of the prior art technical solution to a serial production of such products.

A further disadvantage of the methods used by the prior art lies in the amount of residual materials which must be removed from the finished products and from the injection cavity after each injection operation. In particular, there may be formed burrs and chips of solidified die-cast material in the channels which direct the flows from the injection chamber towards the cavity of the rotor.

Therefore, in the light of the above, there is large room for improvement for the current systems for moulding products. In particular, it would be desirable to have an apparatus and a method for producing a product which allow to increase the rate for manufacturing such products.

### Objects of the invention

An object of the invention is to improve the current apparatuses and methods for the injection moulding of a liquid or semiliquid material that is intended to solidify for manufacturing a product.

Another object is to provide a solution capable of guaranteeing a facilitated movement of the moulding assembly, such to quicken the steps for producing the product.

Another object is to provide a solution capable of increasing the repeatability and the quality of the products.

Still another object is to provide a versatile solution that is capable of generally enhancing the production cycle of the product reducing the production times thereof, in particular such to quicken the steps of injecting, loading and unloading the product.

### Summary of the invention

These and other objects are attained through an injection moulding apparatus and method as defined by the attached claims.

The apparatus thus configured, particularly owing to the mobility and to the specific configuration of the parts of half-moulds, is capable of providing a product without sprue and without supply channels increasing the production yield thereof and optimising the amount of material used for the product.

### Brief description of the drawings

The invention will be clearer and better implemented with reference to the attached drawings, which show an exemplifying and non-limiting embodiment thereof, wherein:
Figure 1 is a perspective view of a first version of an injection moulding apparatus for a die-cast product;
Figure 1A is an elevational section of a die-cast product through a median plane thereof;
Figure 2 is a top view of the injection moulding apparatus of Figure 1;
Figure 3 is an elevational section taken on a median plane which passes through a longitudinal axis of the die-casting moulding apparatus of Figure 1 in an opening configuration;
Figure 4 is an enlarged detail of Figure 3 of two half-moulds, or moulding units, of the moulding apparatus in the opening configuration;
Figure 5 is an elevational section taken on a median plane which passes through a longitudinal axis of the moulding apparatus of Figure 1 in an intermediate configuration;
Figure 6 is an enlarged detail of Figure 5 of the two half-moulds in the intermediate configuration;
Figure 7 is an elevational section taken on a median plane which passes through a longitudinal axis of the moulding apparatus of Figure 1 in a closed configuration;
Figure 8 is a first enlarged detail of Figure 7 of a portion of half mould movement means in the closed configuration;
Figure 9 is a second enlarged detail of Figure 7 of the two half-moulds in the closed configuration;
Figure 10 is an elevational section taken on a median plane which passes through a longitudinal axis of the moulding apparatus of Figure 1 in a moulding configuration;
Figure 11 is a first enlarged detail of Figure 10 of a portion of half mould movement means in the moulding configuration;
Figure 12 is a second enlarged detail of Figure 10 of the two half-moulds in the moulding configuration;
Figure 13 is an elevational section taken on a median plane which passes through a longitudinal axis of the moulding apparatus of Figure 1 in a further opening configuration;
Figure 14 is a first enlarged detail of Figure 13 of a portion of half mould movement means in the further opening configuration;
Figure 15 is a second enlarged detail of Figure 13 of the two half-moulds in the further opening configuration;
Figure 16 is an elevational section taken on a median plane which passes through a longitudinal axis of the moulding apparatus of Figure 1 in an inoperative configuration;
Figure 17 is a first enlarged detail of Figure 16 of a portion of half mould movement means in the inoperative configuration;
Figure 18 is a second enlarged detail of Figure 16 of the two half-moulds in the inoperative configuration;
Figure 19 is a lateral elevational view of the moulding apparatus of Figure 1.
Figure 20 is an elevational section of the moulding apparatus transversal to the plane of the view of Figure 19;

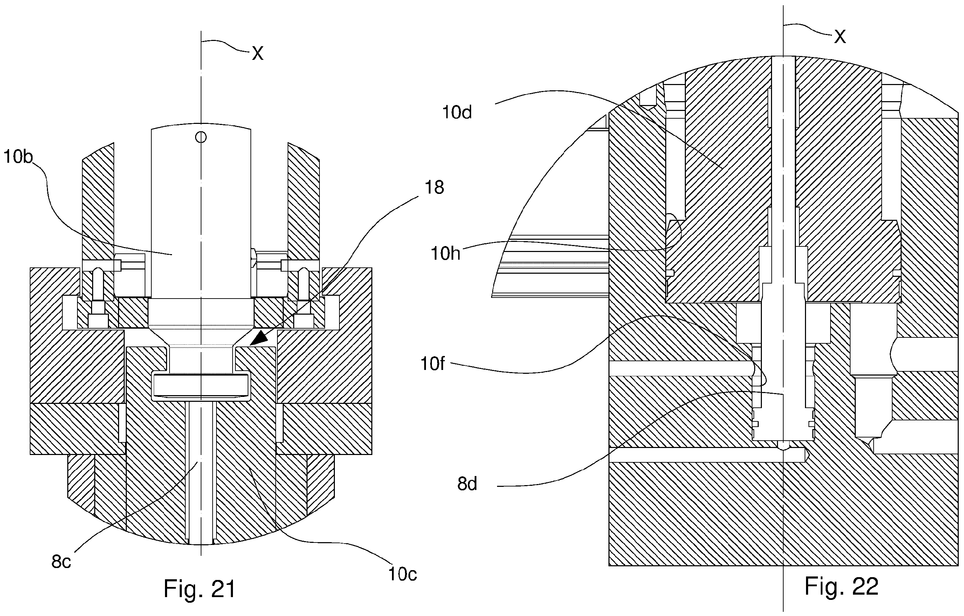

Figure 21 is a first enlarged detail of Figure 20 of disengageable coupling means;
Figure 22 is a second enlarged detail of Figure 21 which shows a portion of half mould movement means;
Figure 23 is an enlarged schematic section of parts of the two half-moulds in the opening configuration of Figure 3;
Figure 24 is an enlarged schematic section of parts of the two half-moulds in the intermediate configuration of Figure 5;
Figure 25 is an enlarged schematic section of parts of two half-moulds in the closing configuration of Figure 7;
Figure 26 is an enlarged schematic section of parts of the two half-moulds in moulding configuration of Figure 10;
Figure 27 is an enlarged schematic section of parts of the two half-moulds in the further opening configuration of Figure 13;
Figure 28 is an enlarged schematic section of the die-cast product of Figure 1A;
Figure 29 is an elevational section of a hopper for supplying molten aluminium coupled to a portion of the injection moulding apparatus;
Figure 30 is a top view of the supply hopper of Figure 29;
Figure 31 is a cyclic diagram of steps of an injection moulding method for producing a die-cast product;
Figure 31A is a plan view of a permanent magnet rotor appropriate to be produced by the injection moulding apparatus of Figure 33;
Figure 31B is a plan view of a magnetic reluctance rotor suitable for being produced by the injection moulding apparatus of Figure 33;
Figure 32 is an elevational section of cooling means;
Figure 33 is a perspective view of a half-mould and of supply means of a second version of an injection moulding apparatus intended to produce a product by means of a resin-polymer mixture, some parts have been removed for the sake of illustration simplicity;
Figure 34 is an elevational section taken on a median plane of the half-mould of figure 33;
Figure 35 is an elevational section taken on a further median plane of a half-mould of a third version of an injection moulding apparatus intended to produce a product by means of a resin-polymer mixture;
Figure 36 is a section taken on a transversal horizontal plane with respect to the median plane of Figure 34 of the injection moulding apparatus of Figure 33 in a de-coupling configuration between a mixing head and a resin transfer unit;
Figure 37 is an elevational section taken on the median plane of the half-mould of Figure 33 in the configuration of Figure 36;
Figure 38 is a section taken on a transversal horizontal plane with respect to the median plane of Figure 34 of the injection moulding apparatus of Figure 33 in a coupling configuration between a mixing head and a unit for transferring resin and for transferring the polymer-reagent mixture from the mixing head to the transfer unit;
Figure 39 is an elevational section taken on the median plane of the half-mould of Figure 33 in the configuration of Figure 38;
Figure 40 is a section taken on a transversal horizontal plane with respect to the median plane of Figure 34 of the injection moulding apparatus of Figure 33 in a coupling configuration between the mixing head and the unit for transferring resin and for transferring the polymer-reagent mixture in the half-mould;
Figure 41 is an elevational section taken on the median plane of the half-mould of Figure 33 in the configuration of Figure 40;
Figure 42 is a section taken on a transversal horizontal plane with respect to the median plane of Figure 34 of the injection moulding apparatus of Figure 33 in a separation configuration between the mixing head and the resin transfer unit;
Figure 43 is an elevational section taken on the median plane of the half-mould of Figure 33 in the configuration of Figure 42;
Figure 44 is a section taken on a transversal horizontal plane with respect to the median plane of Figure 34 of the injection moulding apparatus of Figure 33 in a moulding configuration;
Figure 45 is an elevational section taken on the median plane of the half-mould of Figure 33 in the configuration of Figure 44.

### Detailed description

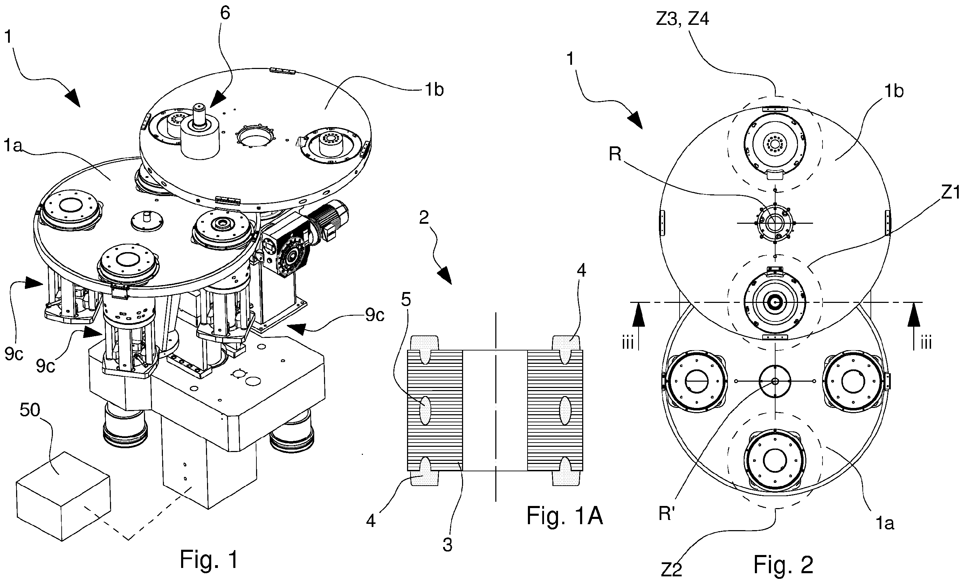

With reference to the figures mentioned above, an injection moulding apparatus for producing a product 2 is indicated with the reference numeral 1 (Figure 1).

The moulding apparatus 1 may be used in the moulding of die-cast items, in particular for parts of electric motors.

Such parts of electric motors may comprise squirrel-cage rotors (also referred to as short-circuit rotors), which are in particular made of die-cast aluminium. The squirrel cage is formed around a metal insert, such as a plate pack, for obtaining an electric motor rotor.

Specifically but not exclusively, the apparatus and the method according to the invention may be used in the automotive industry, in particular in the field of producing engines for electric vehicles. As a matter of fact, in most of electric vehicle fleet existing or being developed, there is the widespread use of asynchronous motors, or induction motors, in which the circulation of alternating electric current in the stator induces a variation of the magnetic field in the rotor and a corresponding drive force. Asynchronous motors frequently include a squirrel-cage rotor.

However, the person skilled in the art understands that the apparatus and the method of the invention may be used in another field similar to the automotive industry, such as for example in the field of household appliances or home automation or in the field of electric tools.

The squirrel cage is formed around a metal insert 3, such as a plate pack, for providing a die-cast product 2, that is an electric motor rotor, in particular the electric motor rotor for an asynchronous motor. The squirrel-cage rotor (like the one shown and indicated with numerical reference 2), includes a substantially cylindrical rotor having two short circuit rings 4 joined together by several bars 5 (Figure 1A).

In other words, the production of the die-cast product 2 provides for moulding molten aluminium (or other molten electrically conductive material) which forms the squirrel cage around the insert 3. As mentioned, the insert 3 may be formed by several superimposed plates for forming the plate pack (for reducing leakage due to parasitic currents during the operation). The plate pack may be held together by a shaft support, or plate-holder core, which can be removed (that is it can be removed once the die-cast product 2 has been formed) or by crimping the plates that form the pack.

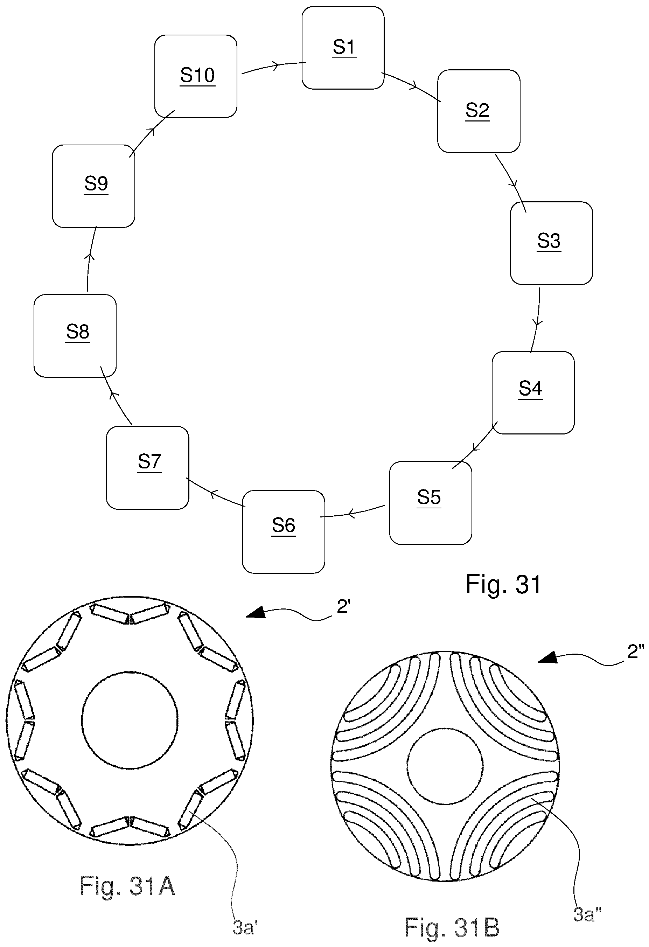

Alternatively, such parts of electric motors may comprise a magnetic reluctance rotor 2" (Figure 31B). The magnetic reluctance rotor may comprise superimposed plates and include several cavities with specific geometries (for example a semicircle) distributed in an axial-symmetric manner (with respect to a symmetry/rotation of the rotor). Such housing cavities may be filled with thermosetting resin (with the function of impregnating and gluing the plates).

Alternatively, such electric motor components may comprise a permanent magnet rotor 2' (Figure 31A), which may consist of superimposed plates comprising several housings distributed in an axial-symmetric fashion with respect to the symmetry/rotation axis of the rotor. Permanent magnets may be inserted into the housings. Even such housings may be filled with a thermosetting resin (with impregnation and gluing function between the magnets and the plates which define the housings).

Alternatively, such electric motor components may comprise a stator (not shown) having a substantially flat shape. Such stator may consist of superimposed plates comprising polar protuberances (radially directed toward, and distributed around, a rotation axis of a respective rotor) around which turns of electrical conductors (for example with flat section) are wound. Cavities and outer surfaces of such stators may be filled with thermosetting resin (with impregnation and gluing function).

In the prior art, the impregnation or the coating with insulation reactive resins are carried out by dripping or spraying resins or by submerging in a liquid bath and subsequent introduction in a polymerisation furnace.

In the context of the invention, in particular with reference to the second and third version of the moulding apparatus 1', 1", the wording "reagent resin/s", "thermosetting resin/s", "polymer-reagent mixture" are used to indicate a mixture of one or more polymers and one or more reagents for promoting the polymerisation of the polymer/s. The polymer-reagent mixture may be of the thermosetting type.

In the second and in the third version of the moulding apparatus 1', 1", the polymer/s and reagent/s are mixed upstream of their injection in an annular supply gap which will be described hereinafter.

In the present description there have been considered an injection moulding apparatus and method used for producing an electric motor rotor or stator. The person skilled in the art may easily understand that such reference is for exemplifying but non-limiting purpose, and that the described solutions may be adopted for products similar to the specific one of an electric motor rotor or stator.

The moulding apparatus 1 may be used in the automotive industry, in particular for electric vehicles, and/or in similar fields like in the field of household appliances or home automation and/or in the field of electric tools.

In the present description for the sake of simplicity reference will be made to components of moulding apparatus indicated with numerical reference 1 (first version). It should be observed that in the figures relating to the second and third version of the apparatus, components that are structurally and functionally similar are indicated either with the same numerical reference without apex or with the same numerical reference with different apex: <'> for the second version and <"> for the third version.

The moulding apparatus 1 includes at least two half-moulds, or moulding units 6, 7, which define a moulding cavity 12 to form the product 2. Each of the two moulding units 6, 7 consists of one or more parts of mould units.

In the first version of the moulding apparatus 1, the product 2 is a die-cast product obtained starting from molten aluminium that is intended to solidify around an insert 3 (which is formed by a plate pack in the first version).

In the shown versions, there are present a single upper half-mould 6 and a plurality of lower half-moulds 7, each of which is coupled with the upper half-mould 6 during the operation to form the product 2 (Figures 1, 2 and 3).

The at least two half-moulds 6, 7 are configured and made, in particular, of a material that is compatible with and suitable for processing molten aluminium to obtain the product 2.

The at least two half-moulds 6', 7', 6", 7" are configured and made, in particular, of a material that is compatible with and suitable for processing a polymer-reagent mixture to obtain the product 2.

A half-mould 7 (a lower half-mould in the shown versions) of the half-moulds 6, 7 extends along a longitudinal axis X.

The half-mould 7 comprises a central moulding body 8a, 8b which extends along the longitudinal axis X, and hollow moulding means 9a, 9b arranged around the central moulding body 8a, 8b and defining together with the central moulding body 8a, 8b an annular supply gap 11 adapted to receive a dose of the material to be supplied in the moulding cavity 12.

The half-mould 7 further comprises a sleeve body 10a that is movable within the annular supply gap 11 and configured to transfer the dose of the material from the annular supply gap 11 to the moulding cavity 12.

The central moulding body 8a, 8b may be movable along the longitudinal axis X independently of the movement of the hollow moulding means 9a 9b and of the sleeve body 10a.

In particular, the movement of the central moulding body 8a, 8b with respect to the hollow moulding means 9a, 9b is independent of the movement of the sleeve body 10a with respect to the hollow moulding means 9a, 9b.

The hollow moulding means 9a, 9b comprise a moulding element 9b adapted to contain and receive the dose of liquid or semiliquid material.

The hollow moulding means 9a, 9b comprise a further moulding element 9a arranged to be engaged with the upper half-mould 6. Furthermore, the further moulding element 9a is shaped so as to be engaged with the moulding element 9b.

In particular, the movement of the central moulding body 8a, 8b with respect to the moulding element 9a is independent of the movement of the sleeve body 10a with respect to the moulding element 9b.

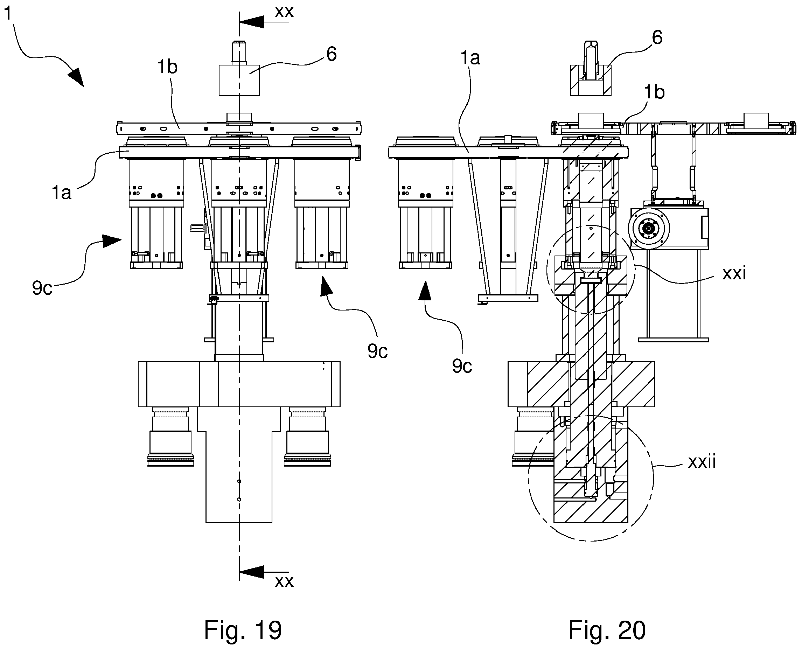

The lower half-mould 7 may comprise a support structure 9c for the moulding means 9a, 9b (Figures 1, 3, 19 and 20). In particular, the support structure 9c is arranged to support the moulding element 9b.

In the shown versions, the support structure 9c includes multiple (four) uprights which protrude from a bottom plate. The bottom plate is provided with a hole which can be traversed by the central moulding body 8a, 8b. In a version not shown, the support structure 9c may include a cup-like structure.

As mentioned, in the first version of the moulding apparatus 1, the moulding element 9b is suitable for receiving and containing the dose of molten aluminium therein.

In the second and in the third version of the moulding apparatus 1', 1", the moulding element 9b is suitable for receiving and containing the dose of polymer-reagent mixture therein. In these versions, the moulding element 9b', 9b" may be provided with sealing elements. In particular, the moulding element 9b', 9b" may be assembled with the sleeve body 10a and the central moulding body 8a (also provided with special sealing elements) so as to receive and contain the dose of reagent resins therein.

The further moulding element 9a comprises, in particular, a substantially annular upper surface suitable for being sealingly engaged with the upper half-mould 6. Such upper surface may be provided with annular counterbore for centring and supporting the insert 3 (such as for example an electric motor block) to be injected with the polymer-reagent mixture.

The further moulding element 9a comprises, in particular, a countersunk lower surface, in particular being conical-shaped, which is arranged to be sealingly engaged with the moulding element 9b. For the application of reactive resins - therefore with reference to the second and the third version of the injection moulding apparatus 1', 1" - the further moulding element 9a', 9a" has a thick-wise development adapted to comprise housing cavities for the sealing elements to contain the reagent resins.

The further moulding element 9a may be fitted to a table body - which will be described hereinafter - in a "floating" manner that is axially (longitudinally) free so that the table body is not subjected to bending stress during coupling of the two half-moulds 6, 7.

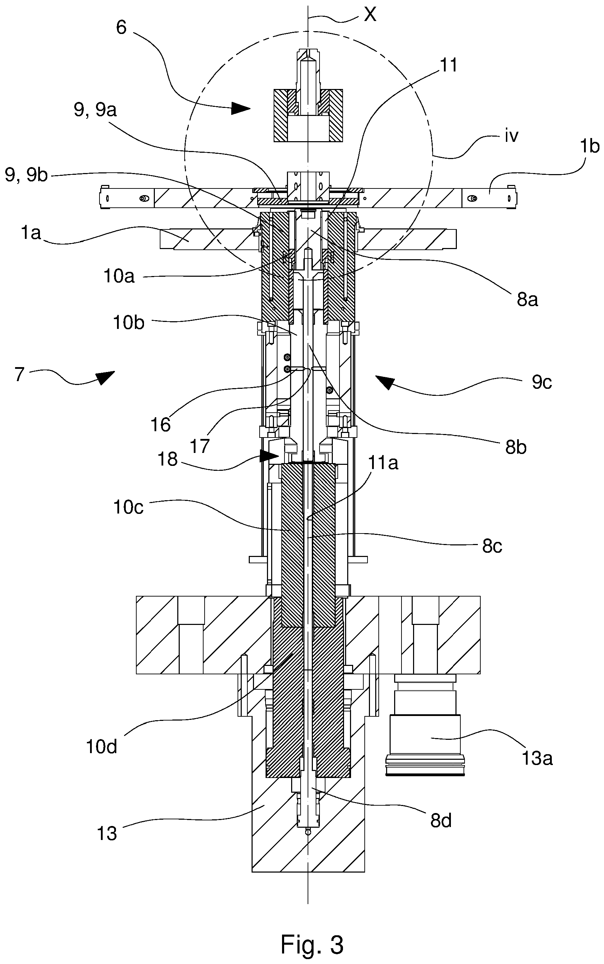

The central moulding body 8a is substantially cylindrical. The central moulding body 8a, 8b comprises, in particular, a contact portion 8a suitable for coming into contact with the lower surface of the insert 3 and/or the product 2. The contact portion 8a may have a recess (as in the shown version, Figure 3) to partially receive the core mentioned above. In the second and third version of the injection moulding apparatus 1', 1", for the injection of resins, the contact portion 8a may be substantially flat and provided with hydraulic sealing elements.

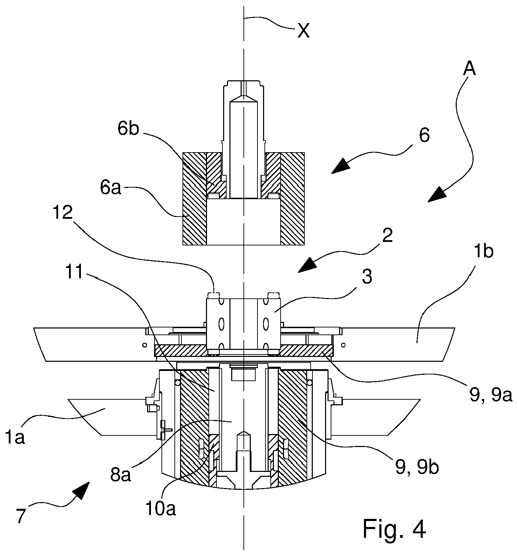

The central moulding body 8a, 8b comprises, in particular, a rod-shaped support portion 8b for supporting the contact portion 8a. The support portion 8b is shaped like a movable rod. The support portion 8b may slide in a part 10b of the sleeve body which will be described hereinafter. The support portion 8b comprises a head arranged to support the contact portion 8a. Such head may slide in a hole obtained in the sleeve body 10a (Figure 4).

The coupling between the rod (support portion 8b) and hole (moulding element 9b) forms an annular gap or cavity that is sealed through the sleeve body 10a so that such annular cavity can contain the molten aluminium during the operation without the molten metal seeping through.

The contact portion 8a may be removably coupled to the support portion 8b so as to allow the replacement of the contact portion 8a alone, for example due to wear or production change.

The sleeve body comprises, in particular, a tubular body 10a that is substantially cylindrical sleeve-shaped and a substantially cylindrical base or extension part 10b fixed to the tubular body (Figures 2 and 3).

In other words, the sleeve body 10a has the function of a movable metering piston with the possibility of being pushed into the annular supply gap or cavity 11 by the base part 10b which forms an extension thereof.

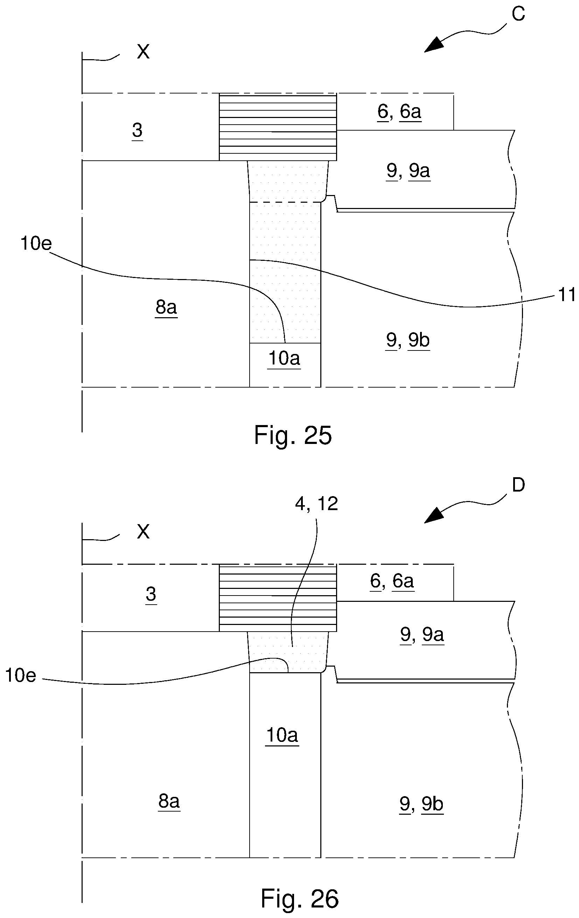

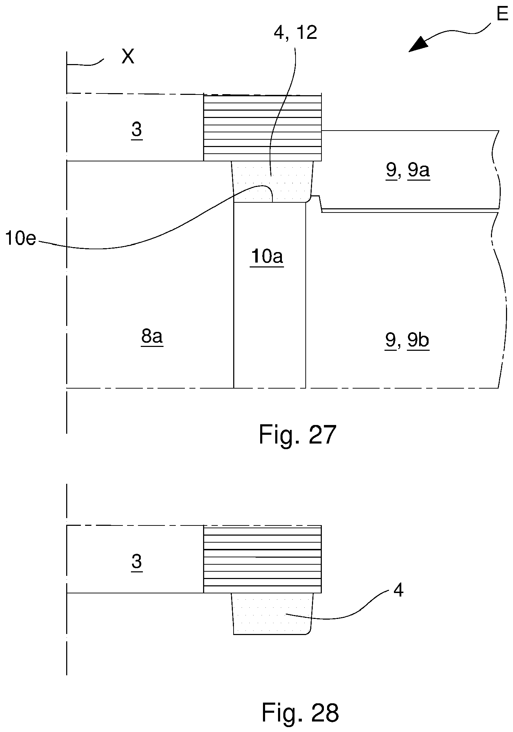

With particular reference to the first version of the injection moulding apparatus 1 for injecting molten aluminium, the sleeve body 10a comprises, in particular, a substantially flat annular upper surface 10e (Figures 25, 26 and 27). The annular upper surface 10e of the sleeve body 10a is configured to delimit the moulding cavity 12 at an annular surface which is intended to form the short circuit ring 4 by means of the solidified aluminium. Therefore, the sleeve body 10a allows to obtain a short circuit ring 4 (in particular the lower ring, in Figures 1A and 28) that is close to the desired end shape (except for a possible removal action for balancing purposes); in other words, the sleeve body 10a allows to obtain a die-cast product 2 without excessive formation of a sprue and/or supply channels.

With particular reference to the second and the third version of the injection moulding apparatus 1', 1" for injecting the thermosetting liquid resin, the sleeve body 10a', 10a" is provided with sealing gaskets and with a flat annular upper surface 10e'.

The annular upper surface 10e, 10e', 10e" of the sleeve body 10a, 10a', 10a" is configured to delimit the moulding cavity 12, 12', 12" at a lower annular surface of the product to be moulded. The sleeve body 10a', 10a" allows to obtain a lower surface of the product with the sole surplus of a sprue associated with a supply channel present in a transfer unit which will be described hereinafter.

The injection moulding apparatus 1 comprises, in particular, a rotary table body 1a and a further rotary table body 1b that are distinct from one another (Figures 1, 2 and 3). The rotary table body 1a and the further table body 1b are partially superimposed according to specific rotation positions so as to allow the mutual alignment of the two half-moulds 6, 7 axially, in particular coaxially, along the longitudinal axis X.

To the mutual alignment of the two half moulds 6, 7 there corresponds a mutual superimposition in axial alignment (along the longitudinal axis X) of the upper half-mould 6, of the moulding body 8a, 8b, of the further moulding element 9a and of the moulding element 9b (and of the respective support structure 9c) in a moulding operating zone Z1 of the injection moulding apparatus 1 (that is an operation for moulding the product is carried out in a region of the moulding apparatus, Figure 2).

In the shown version, the moulding operating zone Z1 is positioned at an overlapping region of the two table bodies 1a, 1b.

The rotary table body 1a and the further table body 1b may rotate around respective rotation axes R, R' substantially parallel to each other and with the longitudinal axis X (Figure 2).

As mentioned, the table body 1a supports one or more moulding elements 9b with respective support structures 9c and the further table body 1b supports one or more further moulding elements 9a. The table body 1a and the further table body 1b are disc-shaped and they are rotatable at respective centres around the rotation axes R, R'. On the table body 1a the moulding elements 9b with the respective support structures 9c (four in the shown version) are arranged angularly equally spaced apart (90° from each other). On the further table body 1b the further moulding elements 9a (two in the shown version) are arranged angularly equally spaced apart (180° from each other).

During the operation, each table body 1a, 1b may rotate to pass through (and reach) operative areas Z1, Z2, Z3, Z4 of the moulding apparatus. As mentioned, both table bodies 1a, 1b pass through (and reach) a common area (i.e. an area which is common to both table bodies 1a, 1b), that is the moulding operating zone Z1.

Additionally to the moulding operating zone Z1, the injection moulding apparatus 1 in particular comprises a loading-inserting zone Z3 (Figure 2) which is positioned to be traversed (and reached) by the further table body 1b, in particular by the further moulding element 9a, so as to allow the loading of the insert 3 on the further moulding element 9a. In the shown version, the loading-inserting zone Z3 is distinct from the moulding operating zone Z1, in particular such loading-inserting zone Z3 is diametrically opposite to the moulding operating zone Z1 with respect to the further table body 1b.

In the first version for injecting molten aluminium, the injection moulding apparatus 1 comprises, in particular, a molten material loading zone Z2 (Figure 2) which is positioned to be traversed (and reached) by the table body 1a, in particular by the moulding element 9b with the respective support structure 9c, so as to allow the loading of the dose of molten aluminium within the annular cavity 11 defined by the recession of the central moulding body 10a of the moulding element 9b with the respective support structure 9c. In the shown version, the molten material loading zone Z2 is distinct from the moulding operating zone Z1, in particular such molten material loading zone Z2 is diametrically opposite to the moulding operating zone Z1 with respect to the table body 1a (Figure 2).

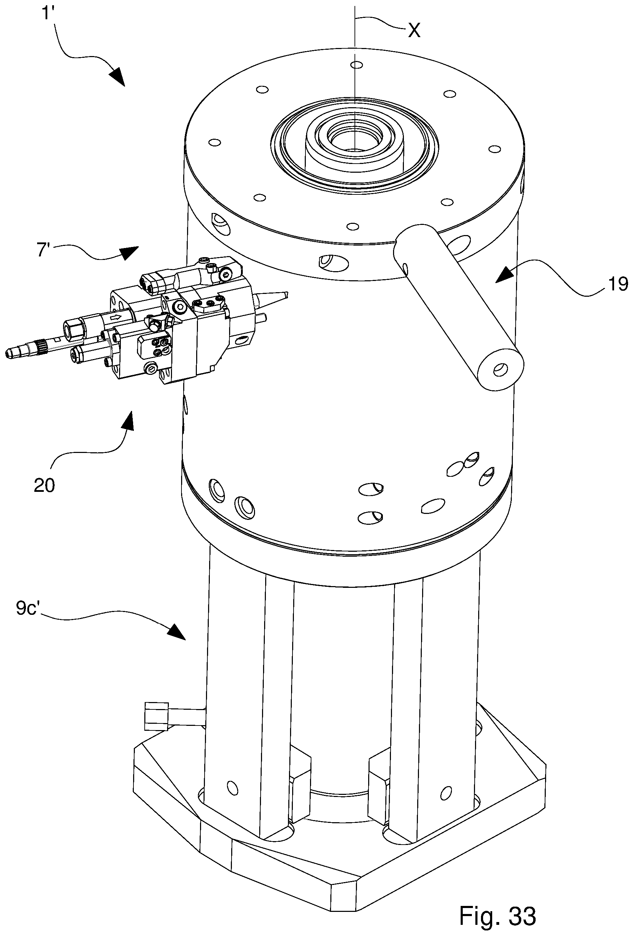

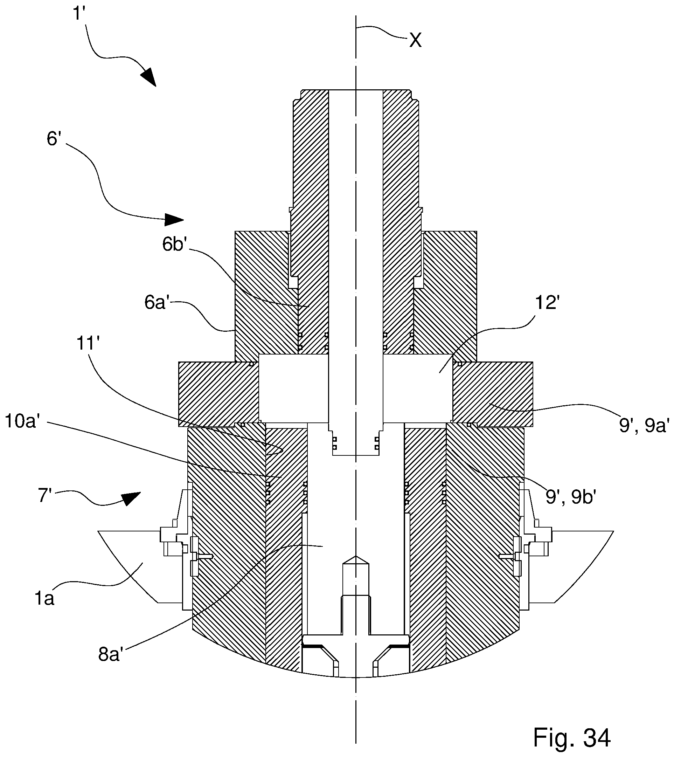

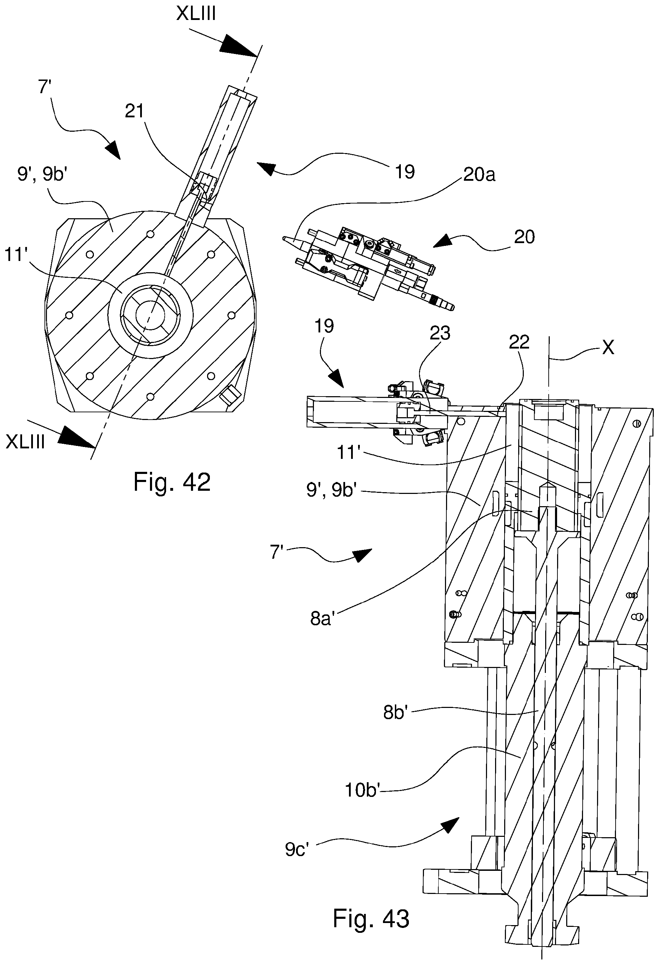

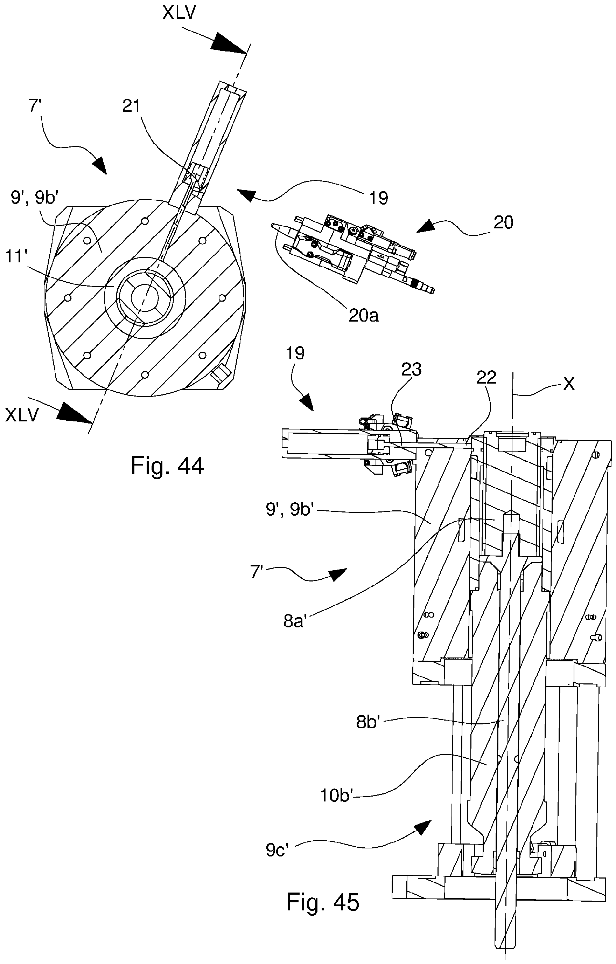

In the second and third version of the moulding apparatus 1', 1", that is in the versions suitable for operating with the polymer-reagent mixture, supply means 19, 20, 19" are provided for supplying the polymer-reagent mixture through a supply channel 22 for the polymer-reagent mixture. The supply channel 22 is adjacent to, and placed in communication with, the annular supply cavity 11', 11" (Figures 33-45).

In both the second and third version, the supply means 19, 20, 19" include, in particular, a mixing head 20 and a transfer unit 19, 19" which can be mutually coupled.

The transfer unit 19, 19" is provided with a self-cleaning conduit or supply conduit 22, and it is configured, in particular, to receive from the mixing head 20 a dose of the polymer-reagent mixture to be transferred to the supply channel 22 and therefore to the annular supply gap 11', 11".

The supply channel 22 extends transversely to the longitudinal axis X.

In the second version (moulding apparatus 1') the supply channel 22 extends - together with the transfer unit 19 - substantially orthogonally with respect to the longitudinal axis X (Figures 33, 36-43).

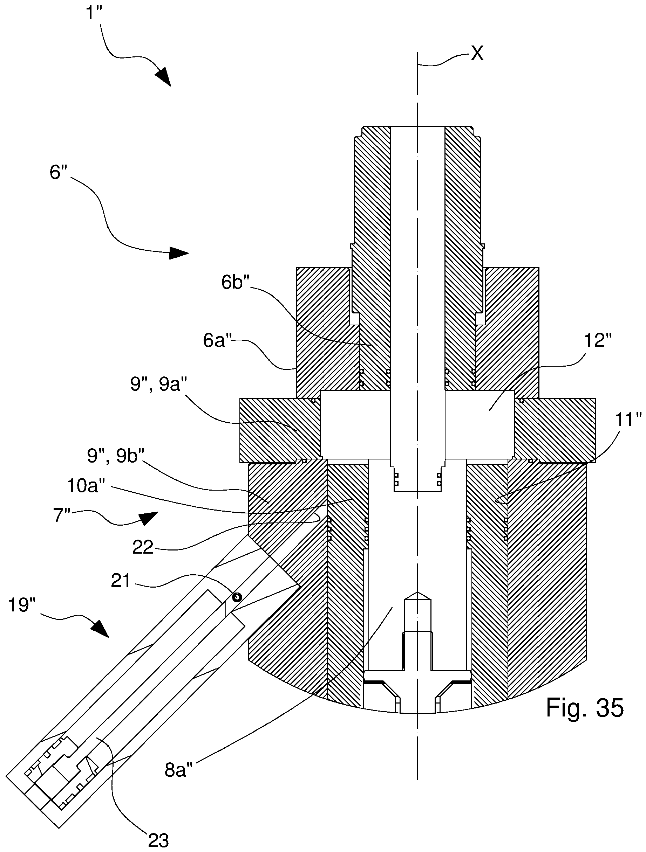

In the third version (moulding apparatus 1") the supply channel 22 extends - together with the transfer unit 19" in a configuration inclined by an acute angle with respect to the longitudinal axis X (Figure 35).

In the second version for injecting thermosetting reagent resins, the injection moulding apparatus 1' comprises an engagement mechanism for the coupling between the mixing head 20 and the transfer unit 19.

The mixing head 20 may be of the self-cleaning and high pressure mixing type (per se known). The mixing head 20 may be provided with a nozzle 20a comprising, in particular, a dispensing cylindrical tubular extension. Such nozzle 20a is configured, in particular, to be engaged into an inlet hole 21 obtained laterally to the transfer unit 19.

Such supply conduit 22 is cylindrical-shaped and it is internally provided with a stem (also called "self-cleaning stem"), which is slidable in the supply conduit 22 and it is hydraulically controlled through a hydraulic cylinder.

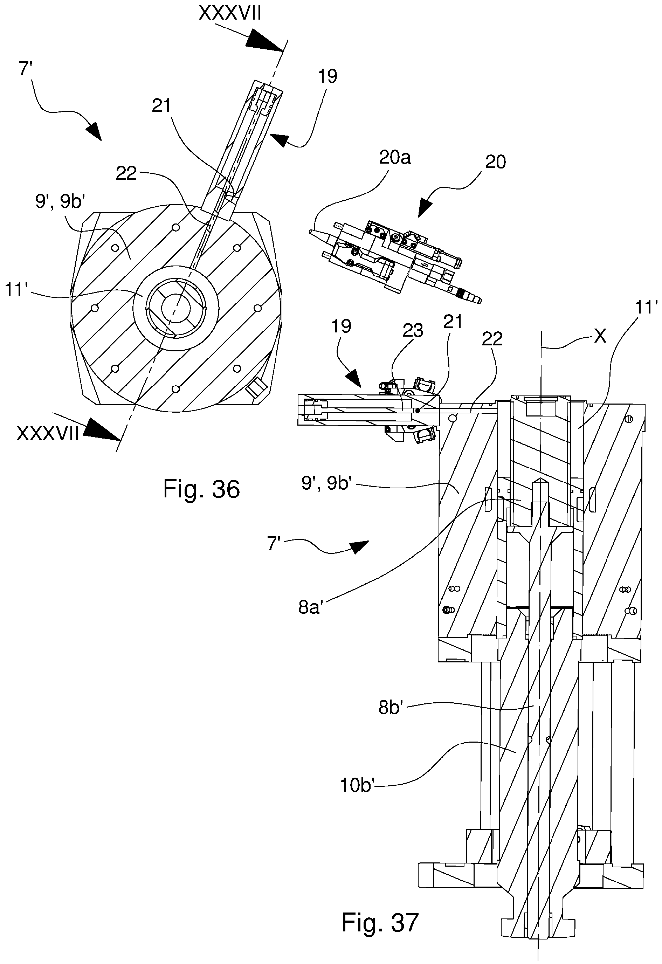

In particular, the stem is configured to recede into the supply conduit 22, freeing an inner surface of the supply conduit up to the inlet hole 21 into which the nozzle 20a of the mixing head 20 is engaged (Figures 36-39).

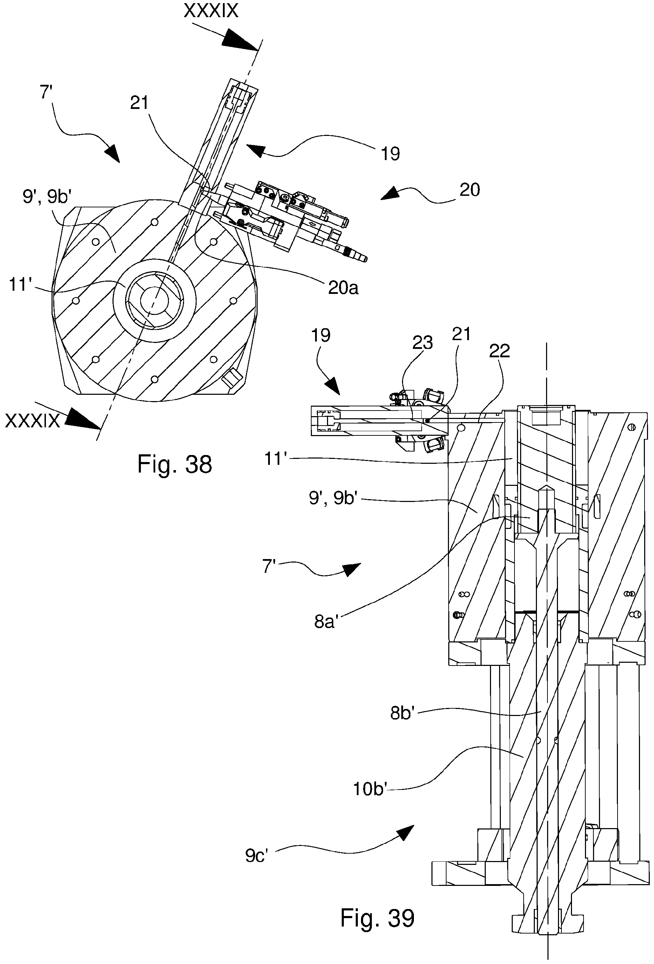

In this configuration, the mixing head 20 is controlled to dispense a programmed given amount of reagent resin within the transfer unit 19', 19" (Figures 38, 39). As mentioned, the transfer unit 19', 19" is provided with a supply conduit 22 which leads up to the annular supply gap 11', 11".

Once the programmed amount of resin has been dispensed, the mixing head 20 is closed ejecting the residual reagent resin. Therefore, such resin is dispensed through the transfer unit 19', 19" into the supply channel 22 of the annular supply gap 11', 11".

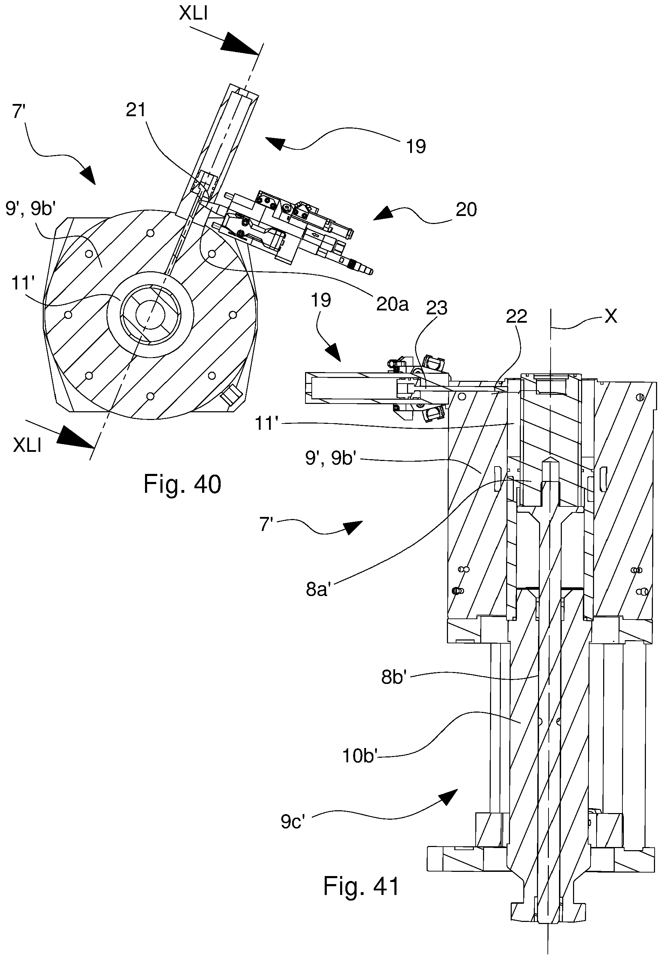

Immediately after, the self-cleaning stem 23 of the transfer unit 20 is controlled to close; this action ejects the accumulated resin residues in the supply conduit 22 towards the annular accumulation volume of the annular supply gap 11', 11" and it also hermetically closes the hole 21 for introducing the resin (Figures 40, 41).

The injection moulding apparatus 1 in particular comprises a product unloading zone Z4 (Figure 2) which is positioned to be traversed (and reached) by the further table body 1b, in particular by the further moulding element 9a (supported and conveyed by the further table body 1b) to allow the removal of the product 2 from the further moulding element 9a. In the shown version, the product unloading zone Z4 is different from the moulding operating zone Z1, in particular such product unloading zone Z4 is substantially coincident with the insert loading zone Z3. In other words, in the shown version, the product unloading zone Z4 is diametrically opposite to the moulding operating zone Z1 with respect to the further table body 1b.

The injection moulding apparatus 1 in particular comprises half mould movement means, or moulding units movement means 8c, 8d, 10c, 10d, configured, in particular, to carry out the controlled movements of the parts which form the half-mould 7.

The half mould movement means 8c,8d, 10c, 10d in particular comprise, a first rod-like actuating member 8c, 8d which extends along the longitudinal axis X and it is configured to move the moulding body 8a, 8b and a second actuating member 10c, 10d which extends around the first actuating member 8c, 8d and it is configured to move the sleeve body 10a (Figure 3).

The first actuating member 8c, 8d is arranged substantially coaxially to the second actuating member 10c, 10d along the longitudinal axis X.

The first actuating member 8c, 8d is substantially cylindrical rod-shaped. The second actuating member 10c, 10d is substantially cylindrical-shaped. Both the first actuating member 8c, 8d and the second actuating member 10c, 10d carry - at the lower end - a hydraulic piston head for performing the movements. A transversal dimension (diameter) of the second actuating member 10c, 10d is larger than a transversal dimension (diameter) of teh first actuating member 8c, 8d. In particular, the second actuating member 10c, 10d is provided with a longitudinal housing cavity 11a (Figure 3) for (slidably) housing the first actuating member 8c, 8d. The first actuating member 8c, 8d may be inserted to slide in such longitudinal housing cavity 11a.

The half mould movement means 8c, 8d, 10c, 10d in particular comprise piston actuating means 8d and 10d (Figure 3) which slide in special cylindrical seats obtained in the block 13. In the shown version, the first piston actuator 8d can be partially inserted into the second piston actuator 10d (Figures 3, 8, 11, 14 and 17).

The piston actuating means 8d, 10d may comprise hydraulic control pistons (like in the shown version). In the shown version, also the piston actuating means 8d, 10d have a mutual coaxial arrangement along the longitudinal axis X.

The half mould movement means 8c, 8d, 10c, 10d in particular comprise a base block 13 (Figure 3) positioned in the moulding operating zone Z1 to support the half mould movement means 8c, 8d, 10c, 10d.

The base block 13 is provided with a first cylindrical chamber 10h in which the second piston actuator 10d is slidable. The half mould movement means 8c, 8d, 10c, 10d comprise a further cylindrical chamber 10f arranged adjacent and coaxial to the first chamber obtained in the base block 13 and which also partly extends on a bottom portion of the second piston actuator 10d. The first piston actuator 8d is slidable in the further cylindrical chamber 10f. In the shown version, the first cylindrical chamber 10h and the further cylindrical chamber 10f are arranged adjacent and coaxial along the longitudinal axis X.

The half mould movement means 8c, 8d, 10c, 10d are inserted into the base block 13 and in particular they are constrained to an actuator device 13a configured to axially displace the base block 13 along the longitudinal axis X lifting or lowering the actuating members 8c, 8d, 10c, 10d to engage or disengage them from the lower half-mould 7 (Figure 3, 19 and 20). In the shown version, the actuator device comprises a third further cylindrical actuator 13a (twin and in a symmetrical position with respect to the axis X) in particular of the hydraulic cylinder type.

The injection moulding apparatus 1 in particular comprises disengageable coupling means 18 (Figure 3) for coupling the half mould movement means 8c, 8d, 10c, 10d to the half-mould 7 in a disengageable manner. The disengageable coupling means 18 are configured to couple the first actuating member 8c, 8d to the central moulding body 8a, 8b and the second actuating member 10c, 10d to the sleeve body 10a respectively, in the moulding operating zone Z1.

The disengageable coupling means 18 in particular comprise an engagement mechanism which, in use - in particular during the rotation of the table body 1a - allows the (lateral) removal of the central moulding body 8a, 8b from the first actuating member 8c, 8d and (simultaneously) the (lateral) removal of the sleeve body 10a (with the respective extension part 10b) from the second actuating member 10c, 10d.

In particular, the half mould movement means 8c, 8d, 10c, 10d are configured to sequentially engage with each half-mould 7 carried by the rotary table body 1a.

As a matter of fact, the half-mould 7 is distinct from the half mould movement means 8c, 8d, 10c, 10d.

The support structure 9c of each half-mould 7 in particular is configured to counter the half mould movement means 8c, 8d, 10c, 10d during the control movements.

In particular, the first actuating member 8c, 8d is separated from the moulding body 8a, 8b at a given height along the longitudinal axis X so as to allow a joint longitudinal movement of the first actuating member 8c, 8d and of the central moulding body 8a, 8b and a corresponding transverse movement between the first actuating member 8c, 8d and the moulding body 8a, 8b. In other words, in the moulding operating zone Z1, the first actuating member 8c, 8d, when it is positioned at the central moulding body 8a, 8b along the longitudinal axis X, may push upwards, or accompany downwards, the central moulding body 8a, 8b along the longitudinal axis X; during the rotation of the table body 1a, when the half-mould 7 - and therefore then central moulding body 8a, 8b - exits from the moulding operating zone Z1, a transverse movement is allowed between the central moulding body 8a, 8b and the first actuating member 8c, 8d.

The second actuating member 10c, 10d can be coupled to the sleeve body 10a, in particular to the base part 10b (through the disengageable coupling means 18) at a further given height along the longitudinal axis X so as to allow (when the disengageable coupling means 18 are engaged), a further joint longitudinal movement of the second actuating member 10c, 10d and of the sleeve body 10a and a further corresponding transverse movement between the second actuating member 10c, 10d, and the sleeve body 10a (given that the engagement can be removed laterally). The second actuating member 10c, 10d and the sleeve body 10a are provided with respective end portions which can be mutually joined and removed. In other words, in the moulding operating zone Z1, the second actuating member 10c, 10d (when the disengageable coupling means 18 are engaged) may push upwards, or accompany downwards, the sleeve body 10a along the longitudinal axis X; during the rotation of the of the table body 1a, when the half-mould 7 - and therefore the sleeve body 10a - exits from the moulding operating zone Z 1 slipping off laterally (that is when the disengageable coupling means 18 are disengaged), a transverse movement between the sleeve body 10a and the second actuating member 10c, 10d is allowed.

The injection moulding apparatus 1 in particular comprises, retaining means 16, to temporarily axially retain the moulding body 8a, 8b with respect to the sleeve body 10a (Figure 3). The retaining means 16, 17 comprise cam means. The retaining means 16, 17 in particular comprise locking cavities 17 obtained on the support portion 8b and elastic pressing means 16 (such as spring pressing means) fixed to the base part 10b of the sleeve body 10a. The elastic pressing means 16 are fixed at the longitudinal housing cavity 11a.

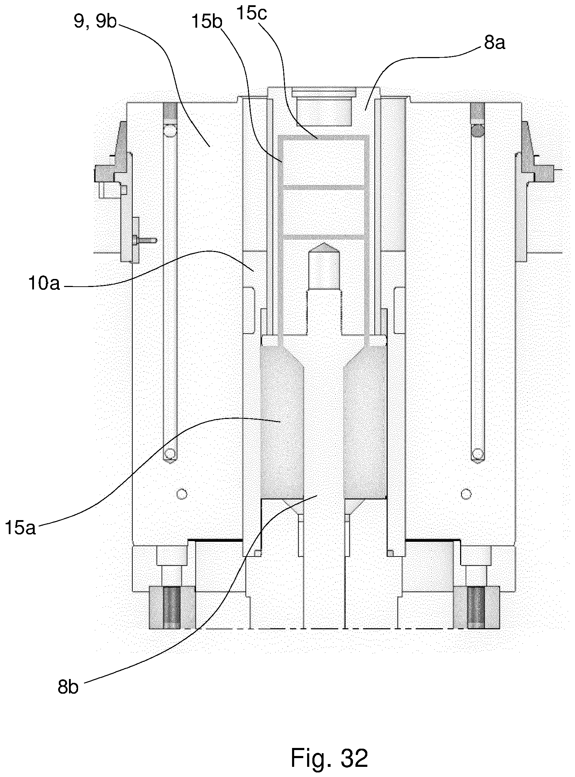

The injection moulding apparatus 1 in particular comprises thermal conditioning means 15a, 15b, 15c for the half-moulds 6, 7 for thermally conditioning the moulding body 8a, 8b, the hollow moulding means 9a, 9b and the sleeve body 10a (and the respective base part 10b) (Figure 32).

The thermal conditioning means 15a, 15b, 15c may comprise thermal conditioning channels 15b, 15c inside the moulding body 8a, 8b. The thermal conditioning channels 15b, 15c may branch from a thermal conditioning chamber 15a arranged to contain the thermal conditioning fluid. In the shown version, the thermal conditioning chamber has a variable volume and it is obtained between the moulding element 9b and the central moulding body 8a, 8b.

In the first version of the injection moulding apparatus 1, the thermal conditioning means in particular comprise cooling means 15a, 15b, 15c for cooling and promoting solidification of the molten aluminium.

In the second and in the third version of the moulding apparatus 1', 1", the thermal conditioning means comprise means 15a, 15b, 15c for heating the polymer-reagent mixture.

The injection moulding apparatus 1 in particular comprises temperature sensor means (not shown) for checking the temperature of the central moulding body 8a, 8b, the hollow moulding means 9a, 9b and the sleeve body 10a.

Such sensor means allow to detect the temperature of the movable parts of the half-mould, in particular of the central moulding body 8a, 8b, of the hollow moulding means 9a, 9b and of the sleeve body 10a. Such detections allow to prevent the seizure of the movable parts deriving from the excessive differential thermal expansions should molten aluminium be applied. As a matter of fact, the operation for moulding the die-cast product 2 transmits a relatively high amount of heat (due to the presence of molten aluminium in contact with such parts), such heat causes specific thermal expansions in the parts of the half-mould 7, in particular in the parts in contact with the molten aluminium, for example the central moulding body 8a, 8b, the hollow moulding means 9a, 9b and the sleeve body 10a. Such specific expansions may cause a mutual interference of such parts of the half-mould 7.

In the case of application with thermosetting reagent resins (second and third version of the injection moulding apparatus 1', 1"), the control of the heating temperature of the half-moulds allows to activate the polymerisation controlled reaction of the resins.

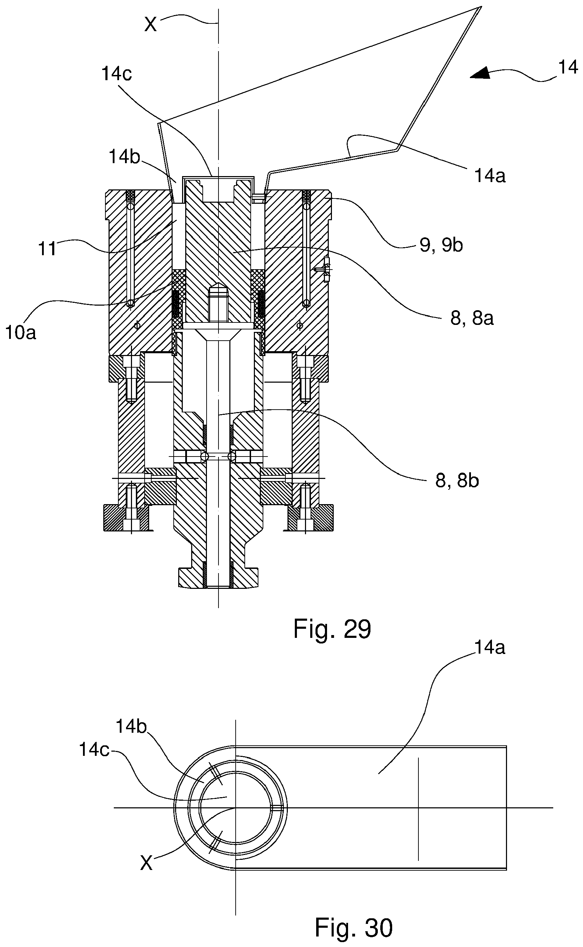

The injection moulding apparatus 1 according to the first version for die-casting aluminium in particular comprises, a hopper 14 for supplying molten aluminium provided with an outlet mouth 14b for supplying molten aluminium to the annular supply gap 11 (Figures 29 and 30). The outlet mouth 14b is substantially ring-shaped so as to be coupled with the annular supply gap 11. In particular, the outlet mouth 14a protrudes axially towards the annular supply gap 11. The supply hopper 14 in particular comprises, a chute portion 14a for directing the molten aluminium towards the outlet mouth 14b. The supply hopper 14 in particular comprises a closed bottom central portion 14c arranged to be engaged with the contact portion 8a of the central moulding body 8a, 8b. The supply hopper 14 is arranged in the molten material loading zone Z2.

The injection moulding apparatus 1 comprises control means 50 in particular configured to control the half mould movement means 8c, 8d, 10c, 10d and for driving the rotary table body 1a and the further rotary table body 1b in rotation in a synchronised manner. Furthermore, the control means 50 in particular may be configured to control the temperature of the central moulding body 8a, 8b, of the hollow moulding means 9a, 9b and of the sleeve body 10a so as to maintain the dimensional tolerance of each of the central moulding body 8a, 8b, the hollow moulding means 9a, 9b and the sleeve body 10a comprised in the range between -0.2 and +0.2 mm, in particular in the range between -0.1 and +0.1 mm.

In the case of application with thermosetting reagent resins (second and third version of the moulding apparatus) the control means 50 also supply to a resin dosing and mixing unit (not shown herein as per se known) the command for enabling to dispense the resins and commands for opening and closing the self-cleaning stem as well as the consent to close or open the supply conduit 22 in the annular supply gap 11.

Several (three) examples (first cycle, second cycle, third cycle) which implement the injection moulding method mentioned above will be described hereinafter.

A first injection moulding cycle for manufacturing a product comprises the steps of moving the central moulding body 8a, 8b, moving the hollow moulding means 9a, 9b, moving the sleeve body 10a to push a dose of material previously loaded in the annular supply chamber 11, into the moulding cavity 12. The central moulding body 8a, 8b is moved independently of the movement of the hollow moulding means 9a, 9b and of the movement of said sleeve body 10a.

A first cycle according to the injection moulding method cyclically comprising the steps S1-S10 which will be described hereinafter (Figure 31) with reference to the creation of an aluminium die-cast product 2.

In an initial step S1 of the first cycle, it is provided for supplying molten aluminium in the annular supply gap 11 of the half-mould 7. The supply of the molten aluminium may be carried out by means of the supply hopper 14 in the molten material loading zone Z2. In particular, the molten aluminium may be poured through the annular supply gap 11 between the moulding element 9b and the central moulding body 8a.

Furthermore, there is provided for loading the insert 3 on the table body 1b, in particular at the further moulding element 9a. The insert 3 is loaded in the loading-inserting zone Z3. In the step for loading the insert 3, the two half-moulds 6, 7 take an opening configuration A (Figures 3, 4 and 23).

The loading of the insert 3 and the supply of the molten aluminium may be carried out substantially simultaneously.

A step S2 for the synchronised rotation of the table body 1a and the further table body 1b is provided for subsequently to the initial step S1. The synchronised rotation is carried out according to opposite rotation direction for each table body 1a, 1b. The synchronised rotation allows to axially align the two half-moulds 6, 7 along the longitudinal axis. In other words, it is provided for rotating the table body 1a (and the further table body 1b) to longitudinally align the half-mould 7 (containing molten aluminium) with the insert 3. In the shown example, the table body 1a rotates by a quarter revolution around the rotation axis R, the further table body 1b rotates by half revolution around its rotation axis R' in the opposite direction with respect to the rotation of the table body 1a.

As mentioned, during the rotation of the table body 1a, at the end of the rotation movement, the fitting between the first actuating member 10c, 10d and the base part 10b of the sleeve body 10a is slidably carried out by means of disengageable coupling means 18.

This allows to implement the step for positioning the half-moulds 6, 7, or final positioning step S3, in which coupling the two half-moulds 6, 7 with the insert 3 is provided for. In this final positioning step S3, the half mould movement means 8c, 8d, 10c, 10d are engaged with the half-mould 7. In the positioning step S3 there is provided for approaching the moulding element 9b to the further moulding element 9a of the hollow moulding means 9a, 9b by means of the hydraulic cylindrical actuators 13a which move the table body 1a (and the moulding element 9b connected thereto as a result) nearing the further moulding element 9a to the moulding element 9b.

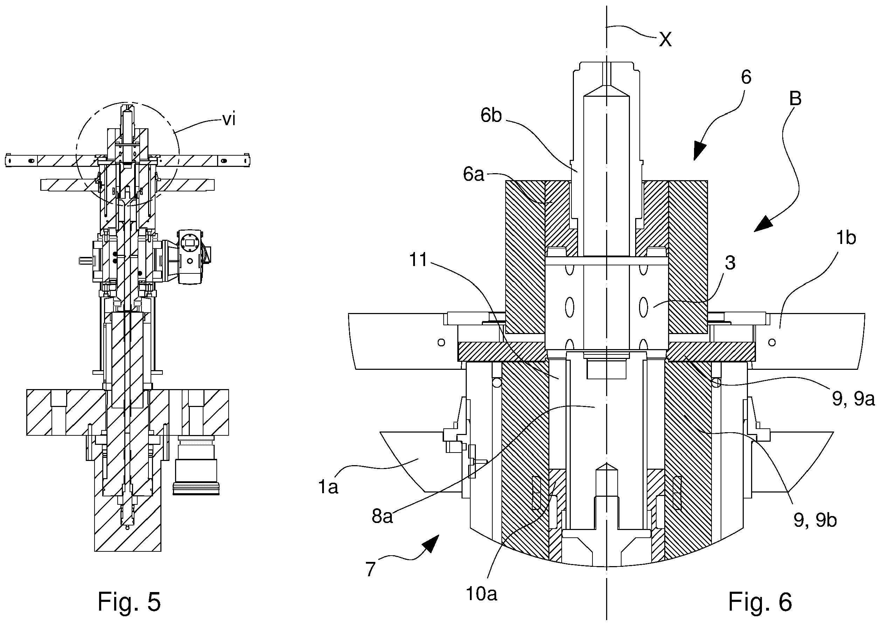

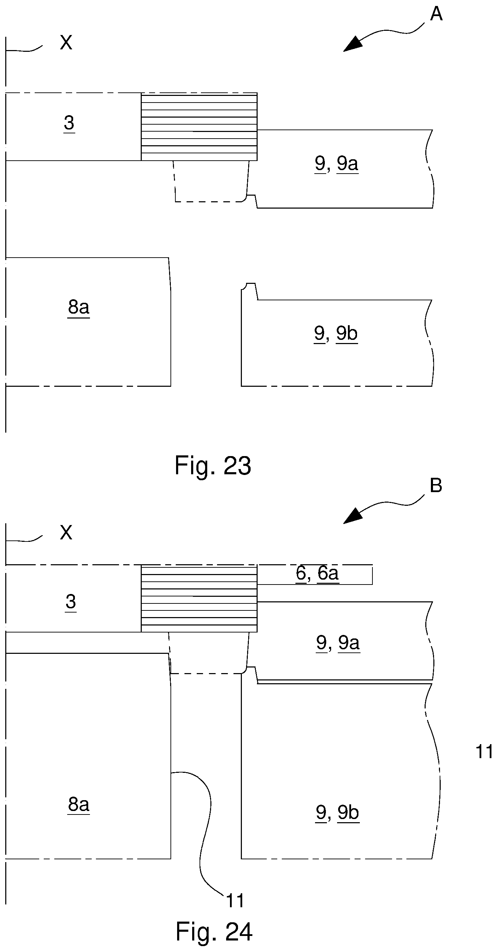

Furthermore, approaching the central moulding body 8a, 8b to the insert 3 is provided for in the positioning step S3. In the positioning step S3, the two half-moulds 6, 7 take an intermediate configuration B (Figures 6 and 24). Such positioning step S3 is carried out by the movement of the base block 13 which is lifted by the actuator device 13a to which the lower half-mould 7 is connected. In the positioning step S3, also the upper half-mould 6 is lowered in a fixed position towards the lower half-mould 7 through the support structure 9c to counter the pressing force to which the components of the lower mould 7 are subjected to reduce the moulding pressure.

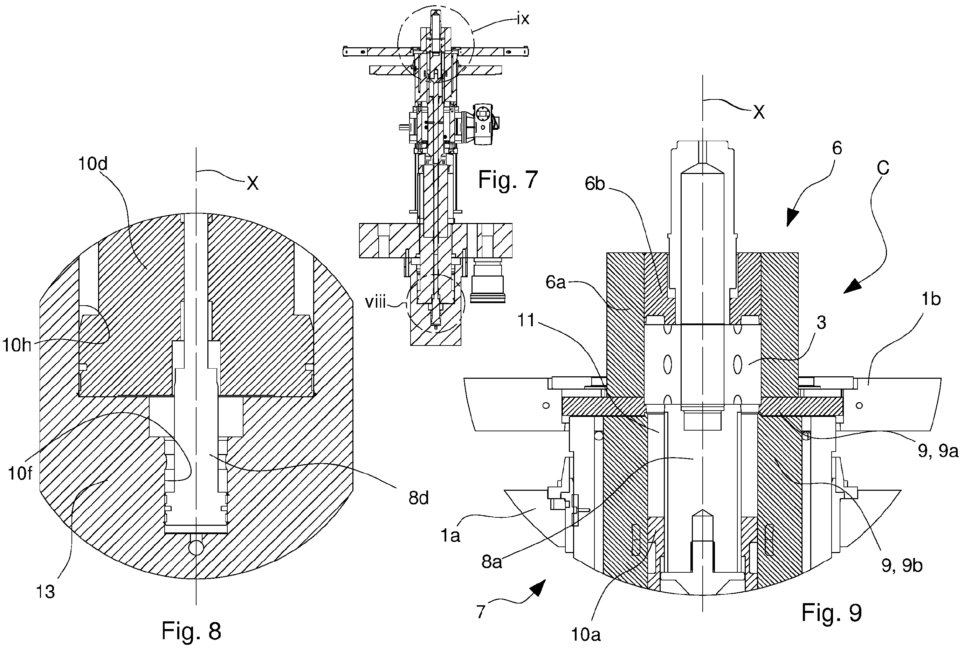

A positioning step S4 which provides for closing the moulding element 9b against the further moulding element 9a in a mutually clamped condition (Figure 9 and 25) is subsequently provided for; this is obtained by means of the further lifting (and pressurisation) of the actuator device 13a which lifts the base block 13 and moves a contact area between the further moulding element 9a and the moulding element 9b to the mutually clamped condition.

This step is followed by a closing step S5 which provides for moving and clamping the central moulding body 8a against the insert 3 (closed configuration C of the half-moulds 6, 7) by means of the first actuating member 8c, 8d. In the closing step S5, the upper half-mould 6 is held in position through the support structure 9c. In the closing step S5, the moulding element 9b and the further moulding element 9a are centred axially and they are in mutual contact through the forces imparted by the hydraulic cylindrical actuators of the actuator device 13a which move the table body 1a and as a result the moulding element 9b connected thereto against the further hollow moulding element 9a which in turn is countered by the upper half-mould 6. In the closing step S5,the half-moulds 6, 7 are fully closed in an sealed manner.

As mentioned, the further moulding element 9a is released and it does not transmit stresses to the table body 1b with which it is paired.

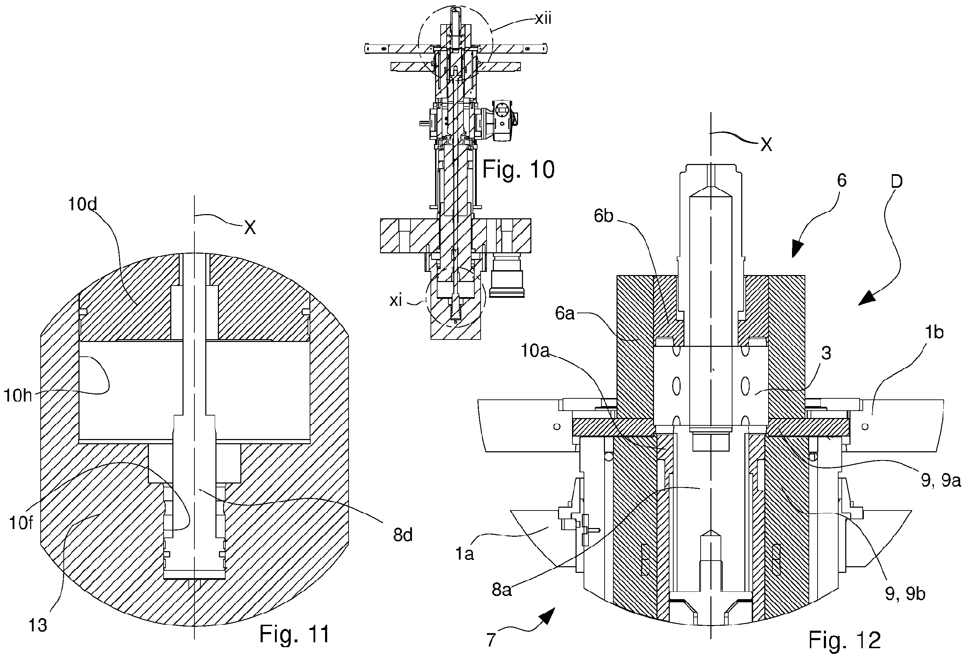

At this point, the step S6 for injecting molten aluminium into the moulding cavity 12 is carried out to form the product 2. In the injection step, the two half-moulds 6, 7 take a moulding configuration D (Figures 12, 25 and 26). In the injection step S6, the sleeve body 10a is pushed by the second actuating member 10c, 10d towards the moulding cavity 12 to inject the dose of pressurised molten (aluminium). The movement and thrust force are carried out by the actuating member 10d. At the end of the injection step S6, the upper annular surface 10e of the sleeve body 10a stops at the short circuit ring of the product 2 so as to avoid the formation of the sprue and/or the formation of supply channels.

Once the aluminium has solidified, there is provided for a step S7 for mutually de-coupling the two half-moulds 6, 7.

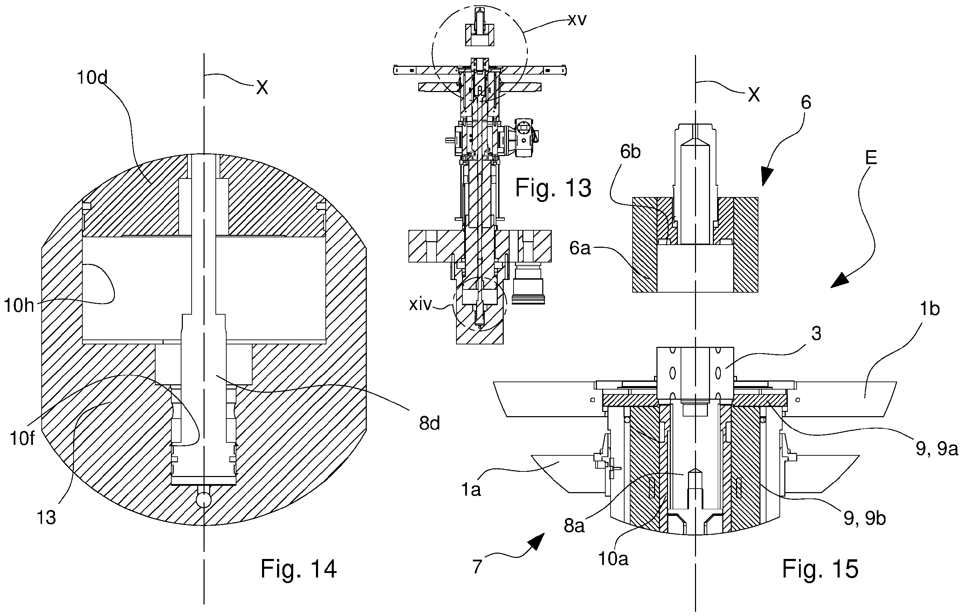

This step provides for retracting the sleeve body 10a and moving the upper half-mould 6 away from the lower half-mould 7, in particular from the further moulding element 9a. In the de-coupling step S7, the two half-moulds 6, 7 take a further opening configuration E (Figure 15).

This step S7 provides for retracting the sleeve body 10a to detach it from the solidified aluminium by means of the second actuating member 10c, 10d coupled thereto through the disengageable coupling means 18.

Simultaneously, also the central moulding body 8a, 8b is driven downwards by the sleeve body 10a thanks to the retaining action of the retaining means 16, 17.

In this step, the upper half-mould 6 is moved upwards.

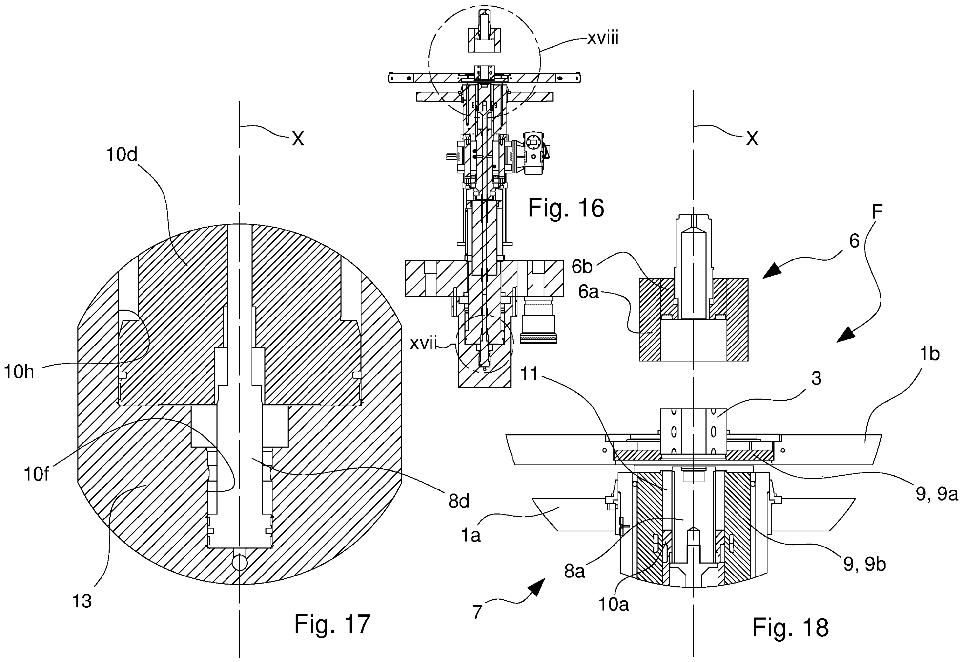

Subsequently, there is provided for a step of fully opening S8 the half-moulds 6, 7 which includes moving the moulding element 9b away from the further moulding element 9a and moving the central moulding body 8a, 8b away from the insert 3. In the full opening step S8, the two half-moulds 6, 7 take an inoperative opening configuration F (Figure 18).

After this full opening step S8 disengaging the half mould movement means 8c, 8d, 10c, 10d from the half-mould 7 is provided for.

Each half-mould 7 is disengaged by rotating the table body 1a and therefore removing a coupling part of the disengageable coupling means 18 which is connected to the half-mould 7.

Subsequently to the full opening step S8 a step S9 for unloading the product 2 is provided for. A further synchronised rotation of the table bodies 1a, 1b to carry the die-cast product 2 obtained to the product unloading zone Z4 (coinciding with the loading-inserting zone Z3) is carried out in this unloading step.

After unloading the product 2 and before loading the insert 3 and/or before supplying the molten aluminium, there is provided for a step S10 for lubricating the two half-moulds 6, 7.

Furthermore, in the injection moulding method there is provided for a step for thermoregulating - through a controlled flow of a thermoregulated fluid to cool - in the case of injection of molten aluminium - the central moulding body 8a, 8b, the hollow moulding means 9a, 9b and the sleeve body 10a. The cooling fluid may comprise a lubricating fluid.

The cooling thermoregulation step may be carried out by controlling the temperature of the central moulding body 8a, 8b, of the hollow moulding means 9a, 9b and of the sleeve body 10a so as to maintain the dimensional tolerance of each of the central moulding body 8a, 8b, the hollow moulding means 9a, 9b and the sleeve body 10a comprised in the range between -0.2 and +0.2 mm, in particular between -0.1 and +0.1 mm.

Alternatively or additionally to the use of a cooling fluid, the half-mould 7 can be cooled during the rotation between the moulding of one product 2 and the subsequent one.

A second moulding cycle may be applied to the inj ection of thermosetting reactive liquid resins. The second cycle may provide for a step S 1', for supplying the thermosetting resins mixed using the mixing head 20 in the annular supply gap 11', 11" of the half-mould 7. The supply of reagent resins is carried out by inserting a nozzle 20a of the mixing head 20 in the supply zone Z2. In particular, the dosed amount of resins is poured through the annular supply gap 11 ' between the moulding element 9b ' and the central moulding body 8a'.

Furthermore, there is provided for loading the insert 3 to be impregnated on the table body 1b, in particular on the moulding element 9b'

Therefore, the step S2' similar to step S2 already described is carried out.

Subsequently to step S2', there is provided for a positioning step S3'in particular comprising lowering the upper half-mould 6' in a fixed position towards the lower half-mould 7' using the support structure 9c' to counter the pressing force to which the components of the lower half-mould 7' are subjected to reduce the moulding pressure.

There follows the positioning step S4' similar to the previous S4 which provides for the pressurised closing of the moulding element 9b' against the further moulding element 9a' using the hydraulic cylindrical actuators 13a which move the entire table body 1a' and the moulding element 9b' connected thereto as a result upwards up to a contact position of the further moulding element 9a' with the moulding element 9b'.

There follows a step S5' similar to the previously described positioning and clamping step S5, which provides for the pressurised closing of the central moulding body 8a' against the insert 3 (closed configuration C of the half-moulds 6, 7) through the first actuating member 8c', 8d'.

The subsequent step S6' provides for injecting the liquid resin into the cavity to be impregnated: the step provides for activating a vacuum application valve installed in the upper half-mould 6' and the controlled lifting of the annular sleeve body 10a' which pushes the reagent resin into the cavity to be engaged; this is obtained through the pressure of the control oil of the second piston actuator 10d'.

Step S6' provides for pressurising and maintaining the pressure of the annular supply gap 11' throughout the resin polymerisation period. This allows to transfer the resin by filling through an annular chamber in which the resin is pushed in a synchronised manner towards the entire lower surface of the product guaranteeing the filling thereof that is even and without air bubbles in the cavity of the product. The material is introduced into the moulding cavity 12' with a bottom upwards flow so as to push any air residues towards the upper surface and guarantee an impregnation that is even, without defects and quick.

The pressurisation of the material causes the collapse of any air bubbles which are accumulated in the various recesses. The pressure is maintained up to the polymerisation of the resin and this allows to compensate for the shrinking of the resin during the polymerisation and solidification process. Such shrinking reach percentages of volume up to 5% - 6% e which, if not compensated, create distortions of the impregnated product and even the fragility zones of the product in unpredictable positions.

The step S6' is complete when the polymerisation time is over.

There follow the steps S7' and S8' and S9' similar to the previous S7 and S8 and S9.

A third moulding cycle according to the moulding method may be carried out for the distributed injection of thermosetting reactive liquid resins which provides for a step S1" in which the insert 3 is loaded and the upper half-mould 6' is lowered until it covers and partially closes the insert 3.

The subsequent steps S2" and S3" are similar to the previous steps S2 and S3.

There follows a step S4" for the controlled lifting of the sleeve body 10a' up to a position for starting the filling the annular supply gap 11'; in which there is provided for the simultaneous opening the supply channel 22 of the transfer unit 19 to allow the introduction of reactive resin in the supply channel 22 and 19a at the inlet hole 21 of the nozzle 20a of the mixing head 20.

There is subsequently provided for a step S5" for the controlled dispensing of a programmed amount of reagent resin which passes through the supply channel 22 and it starts filling the annular supply gap 11'. Simultaneously, there is provided for the controlled lowering of the sleeve body 10a' actuated up to a programmed height which corresponds to a set accumulation of resin.

The dispensing step S5" is completed with the pressurisation of the annular supply gap 11'. A pressure sensor installed in the moulding element 9b' at the supply channel 22 detects the pressure increase and commands the end of the dispensing and the resulting closure of the mixing head 20.

The subsequent step S6" provides for pressurising and maintaining the pressure of the annular supply gap 11' throughout the resin polymerisation period. This allows to implement a first step for dispensing resin towards all cavities of the product to be impregnated and a subsequent step in which the resin, after even invading the farthest and most difficult to impregnate, is pressurised therefore collapsing any air sacs or bubbled that have accumulated in the various recesses. The step S6" for maintaining the pressure until the polymerisation of the resin further allows to compensate for the shrinking of said resin undergoing solidification, shrinking which reaches percentages of volume up to 5%, 6% and which if not compensated create distortions of the impregnated product and also the fragility of the structure in unpredictable positions. The step S6" is complete when the polymerisation time is over.

There follow the steps S7" and S8" and S9" similar to the previous S7 and S8 and S9. In the light of the above, it should be observed that the apparatus according to the invention attains all the pre-established objects.

The apparatus thus configured, particular due to the fact that the moulding element 9b is movable in a controlled manner along the longitudinal axis X by moving the block 13 and the table 1b; due to the fact that the central moulding body 8a, 8b is movable along the longitudinal axis X independently by actuating the hydraulic piston 8d, due to the fact that the sleeve body 10a is movable along the axis X controllably and independently, is capable of providing a product without sprue increasing the production yield thereof.

The independence of movements of the parts of the moulding unit 7, that is the central moulding body 8a, 8b, the hollow moulding means 9a, 9b and the sleeve body 10a, allows a relatively precise mutual positioning of such parts allowing the injection moulding apparatus 1 to correctly carry out all the moulding steps.

Thanks to the movement independence between the parts of the moulding units 7 there can be obtained an apparatus that is versatile in carrying out the injection moulding process.

For the die-casting application with aluminium, the particular shape and configuration of the sleeve body 10a allow to obtain a die-cast product 2 whose overall shape is close to the final shape, that is without the formation of the sprue and/or of the supply channels.

For the injection application of thermosetting resins, the apparatus and the process described above, the shape and configuration of the sleeve body 10a which provide an injection distributed on an annular surface, are capable of providing an impregnation process with thermosetting resin and a product whose overall shape is close to the final shape with a very limited sprue and with an impregnation quality that is compact, without defects and distortions. Furthermore, the injection moulding apparatus and method allow for an even distribution of the thermosetting resin, without air bubbles and impregnated areas. This is obtained despite the presence of moulding inserts such as coils, magnets and plates characterised by coupling zones (that is interface zones between the insert and the polymer-reagent mixture) that are difficult to reach and fill using the prior art techniques.

At the same time, production yield is increased, the (low) amount of metal material used for the die-cast product is optimised while the electrical insulation, impregnation homogeneity and repeatability are improved, same case applying to the mechanical bonding characteristics for injecting thermosetting reactive resins.

The cooperation of disengageable coupling means 18 with the half mould movement means 8c, 8d, 10c, 10d and with the half-mould 7 allows to integrate the moulding apparatus 1 with one or more rotary table bodies 1a, 1b.

The removability of the movable parts of the half-mould 7, in particular of the contact portion 8a from the support portion 8b of the central moulding body 8a, 8b allows to replace only the components subject to wear or failure without having to replace the entire half-mould 7.

The cooling means 15a, 15b, 15c integrated in the movable parts of the half-mould 7, in particular in the central moulding body 8a, 8b allows to obtain an even cooling in the half-mould 7 and improve the repeatability of the die-cast product 2.

The heating means 15a, 15b, 15c integrated in the movable parts of the half-mould 7, in particular in the central moulding body 8a, 8b allows to obtain an even heating in the half-mould 7 and improve the repeatability of the product attaining a controlled polymerisation time in the case of injection of thermosetting resins.

The control of the temperature of the movable parts of the half-mould 7, in particular of the central moulding body 8a, 8b, of the hollow moulding means 9a, 9b and of the sleeve body 10a allows to prevent the seizure of the movable parts, improving the production yield.

Furthermore, the configuration of the coupling means of the half-moulds allows to provide for coating the components with anti-stick wax and allow the easy de-moulding of the workpieces impregnated with reactive resins.

Furthermore, the aforementioned thermal conditioning means allow to obtain an even control of the temperature in the half-moulds and improve the repeatability of the product impregnated by die-casting or by injecting thermosetting resins.

## Claims

1. Injection moulding apparatus (1; 1'; 1") for manufacturing a product (2) by injecting a liquid or semiliquid material that is intended to solidify, including at least two moulding units (6, 7; 6', 7'; 6", 7") defining a moulding cavity (12; 12'; 12") for forming said product (2),
wherein parts (7; 7'; 7") of one of said at least two moulding units (6, 7; 6', 7'; 6", 7") extend along a longitudinal axis (X), said parts (7; 7'; 7") of moulding units comprising:
- a central moulding body (8a, 8b; 8a', 8b'; 8a", 8b") extending along said longitudinal axis (X),
- hollow moulding means (9a, 9b; 9a', 9b'; 9a", 9b") arranged around said central moulding body (8a, 8b; 8a', 8b'; 8a", 8b") and defining together with said central moulding body (8a, 8b; 8a', 8b'; 8a", 8b") an annular supply gap (11; 11'; 11") suitable for receiving a dose of said material to be supplied to said moulding cavity (12; 12'; 12"),
- a sleeve body (10a; 10a'; 10a") that is movable within said annular supply gap (11; 11'; 11") and configured to transfer said dose of said material from said annular supply gap (11; 11'; 11") to said moulding cavity (12; 12'; 12").
**characterised in that** said central moulding body (8a, 8b; 8a', 8b'; 8a", 8b") is movable along said longitudinal axis (X) independently of the movement of said hollow moulding means (9a, 9b; 9a', 9b'; 9a", 9b") and of said sleeve body (10a; 10a'; 10a").

2. Injection moulding apparatus (1; 1'; 1") according to claim 1, wherein said at least two moulding units (6, 7; 6', 7'; 6", 7") are configured and made of a material compatible with and suitable for processing molten aluminium to obtain said product (2).

3. Injection moulding apparatus (1; 1'; 1") according to claim 1, wherein said at least two moulding units (6, 7; 6', 7'; 6", 7") are configured and made of a material compatible with and suitable for processing a polymer-reagent mixture for obtaining said product (2).

4. Injection moulding apparatus (1; 1'; 1") according to any one of the preceding claims, comprising half mould movement means (13, 13a, 8c, 8d, 10c, 10d) for moving and maintaining in a mutually clamped condition said moulding means (9a, 9b; 9a', 9b'; 9a", 9b"), said central moulding body (8a, 8b; 8a', 8b'; 8a", 8b") and said sleeve body (10a; 10a'; 10a") along the longitudinal axis (X).

5. Injection moulding apparatus (1; 1'; 1") according to any one of the preceding claims, comprising independent control means for moving and maintaining in a mutually clamped condition said moulding means (9a, 9b; 9a', 9b'; 9a", 9b"), said central moulding body (8a, 8b; 8a', 8b'; 8a", 8b") and said sleeve body (10a; 10a'; 10a") along the longitudinal axis (X).

6. Injection moulding apparatus (1; 1'; 1") according to any one of the preceding claims, comprising half-mould movement means for moving and maintaining in a mutually clamped condition said at least two moulding units (6, 7; 6', 7'; 6", 7") along the longitudinal axis (X).

7. Injection moulding apparatus (1; 1'; 1") according to any one of the preceding claims, and comprising disengageable coupling means (18) for coupling said half mould movement means (8c, 8d, 10c, 10d) with said half mould (7; 7'; 7") in a disengageable manner.

8. Injection moulding apparatus (1; 1'; 1") according to any one of claims 4 to 7 as claim 5 is appended to claim 4 or as claim 6 is appended to claim 4 or to claim 5 as appended to claim 4 or as claim 7 is appended to claim 6 as appended to claim 4 or on claim 5 as appended to claim 4, wherein said half mould movement means (8c, 8d, 10c, 10d) comprise an actuating member (8c, 8d) that extends along said longitudinal axis (X) and it is configured to move said central moulding body (8a, 8b; 8a', 8b'; 8a", 8b"), and a second actuating member (10c, 10d) that extends around said first actuating member(8c, 8d) and it is configured to move said sleeve body (10a; 10a'; 10a") with respect to said central moulding body (8a, 8b; 8a', 8b'; 8a", 8b") independently.

9. Injection moulding apparatus (1; 1'; 1") according to claim 8, wherein said first actuating member (8c, 8d) is arranged coaxially with said second actuating member (10c, 10d) along said longitudinal axis (X), and wherein said second actuating member (10c, 10d) is provided with at least one longitudinal housing cavity (11a) for said first actuating member (8c, 8d), said first actuating member (8c, 8d) being at least partially insertable into said longitudinal housing cavity (11a) along said longitudinal axis (X).

10. Injection moulding apparatus (1; 1'; 1") according to any one of claims 4 to 9 as claim 5 is appended to claim 4 or as claim 6 is appended to claim 4 or to claim 5 as appended to claim 4 or as claim 7 is appended to claim 6 as appended to claim 4 or to claim 5 as appended to claim 4, wherein said half mould movement means (8c, 8d, 10c, 10d) comprise piston actuating means (8d, 10d), a first piston actuator (8d) of said first actuating member (8c, 8d) being insertable into a second piston actuator (10d) of said second actuating member (10c, 10d).

11. Injection moulding apparatus (1; 1'; 1") according to any one of the preceding claims, comprising a rotating table body (1a) and a further rotating table body (1b) that are distinct from one another and overlap at least partially so as to enable said at least two moulding units (6, 7; 6', 7'; 6", 7") to be aligned reciprocally according to specific rotation positions axially along said longitudinal axis (X), said table body (1a) and said further table body (1b) rotating around respective rotation axes (R, R') parallel to said longitudinal axis (X).

12. Injection moulding apparatus (1; 1'; 1") according to claim 11, comprising control means (50) configured to control in position said half mould movement means (13a, 8c, 8d, 10c, 10d) and rotate and position said rotating table body (1a) with respect to said further rotating table body (1b).

13. Injection moulding apparatus (1; 1'; 1") according to any one of the preceding claims, wherein said hollow moulding means (9a, 9b; 9a', 9b'; 9a", 9b") comprise a cylindrical moulding element (9b; 9b'; 9b"), in particular with an annular cylindrical section, and a further annular moulding element (9a; 9a'; 9a"), said central moulding body (8a, 8b; 8a', 8b'; 8a", 8b") being cylindrical.

14. Injection moulding apparatus (1; 1'; 1") according to any one of claims 11 to 13, wherein said table body (1a) supports one or more moulding elements (9b; 9b'; 9b") and said further table body (1b) supports one or more further moulding elements (9a; 9a'; 9a").

15. Injection moulding apparatus (1; 1'; 1") according to any one of claims 9 to 14, wherein said at least two moulding units (6, 7; 6', 7'; 6", 7") comprise an upper moulding unit (6; 6'; 6") and said parts (7; 7'; 7") of moulding units are arranged below said upper moulding unit (6; 6'; 6"), and wherein said upper moulding unit (6; 6'; 6"), said moulding element (9b; 9b'; 9b") and said further moulding element (9a; 9a'; 9a") overlap reciprocally and are in axial alignment with said central moulding body (8a, 8b; 8a', 8b'; 8a", 8b"), in a moulding operating zone (Z1) of said injection moulding apparatus (1; 1'; 1").

16. Injection moulding apparatus (1; 1'; 1") according to claim 15, wherein said disengageable coupling means (18) are configured to couple respectively said first actuating member (8c, 8d) with said central moulding body (8a, 8b; 8a', 8b'; 8a", 8b") and said second actuating member (10c, 10d) with said sleeve body (10a; 10a'; 10a") in said moulding operating zone (Z1).

17. Injection moulding apparatus (1; 1'; 1") according to claim 16, and comprising a loading-inserting zone (Z3) for loading an insert to be included in said product (2), said loading-inserting zone (Z3) being distinct from said moulding operating zone (Z1) and positioned to be traversed by said further table body (1b) so as to enable said insert to be loaded onto said moulding element (9a; 9a'; 9a").

18. Injection moulding apparatus (1; 1'; 1") according to one of claims 15 to 17, comprising a zone for loading molten material (Z2), distinct from said moulding operating zone (Z1) and positioned to be traversed by said table body (1a) so as to enable said dose to be loaded into said moulding element (9b; 9b'; 9b").

19. Injection moulding apparatus (1; 1'; 1") according to one of claims 15 to 18, comprising a product unloading zone (Z4), coinciding with said insert loading zone (Z3) and positioned to be traversed by said further table body (1b) so as to enable said product (2) to be removed from said further moulding element (9a; 9a'; 9a").

20. Injection moulding apparatus (1; 1'; 1") according to any one of the preceding claims, wherein said central moulding body (8a, 8b; 8a', 8b'; 8a", 8b") comprises a contact portion (8a; 8a'; 8a") suitable for contacting said product (2) and a support portion (8b; 8b'; 8b") for supporting said contact portion (8a; 8a'; 8a"), said contact portion (8a; 8a'; 8a") being removably fixed to said support portion (8b; 8b'; 8b") so as to enable the contact portion (8a; 8a'; 8a") to be replaced.

21. Injection moulding apparatus (1; 1'; 1") according to one of claims 3 to 20, wherein said first actuating member (8c, 8d) is separated from said central moulding body (8a, 8b; 8a', 8b'; 8a", 8b") at a given height along said longitudinal axis (X) so as to enable a joint longitudinal movement of said first actuating member (8c, 8d) and said central moulding body (8a, 8b; 8a', 8b'; 8a", 8b") and a relative transverse movement between the first actuating member (8c, 8d) and said central moulding body (8a, 8b; 8a', 8b'.

22. Injection moulding apparatus (1; 1'; 1") according to one of claims 3 to 21, wherein said second actuating member (10c, 10d) is separated from said sleeve body (10a; 10a';10a") at a further given height along said longitudinal axis (X) so as to enable a further joint longitudinal movement of said second actuating member (10c, 10d) and said sleeve body (10a; 10a'; 10a") and a further relative transverse decoupling movement between said second actuating member (10c, 10d) and said sleeve body (10a; 10a'; 10a"), said second actuating member (10c, 10d) and said sleeve body (10a; 10a';10a") being provided with respective mutually joinable and removable end portions.

23. Injection moulding apparatus (1; 1'; 1") according to any one of the preceding claims, comprising retaining means (16, 17) to temporarily axially retain said central moulding body (8a, 8b; 8a', 8b'; 8a", 8b") with respect to said sleeve body (10a; 10a'; 10a").

24. Injection moulding apparatus (1; 1'; 1") according to any one of the preceding claims, comprising thermal conditioning means (15a, 15b, 15c) for thermally conditioning said central moulding body (8a, 8b; 8a', 8b'; 8a", 8b"), said hollow moulding means (9a, 9b; 9a', 9b'; 9a", 9b") and said sleeve body (10a; 10a'; 10a"), wherein said thermal conditioning means (15a, 15b, 15c) comprise thermal conditioning channels (15b, 15c) inside said central moulding body (8a, 8b; 8a', 8b'; 8a", 8b").

25. Injection moulding apparatus (1; 1'; 1") according to any one of claims 2 to 24 as appended to claim 2, wherein said thermal conditioning means comprise cooling means (15a, 15b, 15c) for cooling and promoting solidification of the molten aluminium.

26. Injection moulding apparatus (1; 1'; 1") according to any one of claims 3 to 24 as dependent on claim 3, wherein said thermal conditioning means comprise heating means (15a, 15b, 15c) for said polymer-reagent mixture.

27. Injection moulding apparatus (1; 1'; 1") according to any one of the preceding claims, comprising temperature sensor means for checking the temperature of said central moulding body (8a, 8b; 8a', 8b'; 8a", 8b"), said hollow moulding means (9a, 9b; 9a', 9b'; 9a", 9b") and said sleeve body (10a; 10a'; 10a").

28. Injection moulding apparatus (1; 1'; 1") according to any one of the preceding claims as appended to claim 2, comprising a supply hopper (14) for molten aluminium provided with an outlet port (14b) for molten aluminium, said outlet port (14b) being substantially ring-shaped to be coupled with said annular supply gap (11).

29. Injection moulding apparatus (1'; 1") according to any one of claims 1 to 27 as appended to claim 3, comprising supply means (19, 20; 19") for supplying said polymer-reagent mixture through a supply channel (22) for polymer-reagent mixture, said supply channel (22) being contiguous and communicating with said annular supply cavity (11), said supply channel (22) extending transversely to said longitudinal axis (X).

30. Injection moulding apparatus (1'; 1") according to claim 29, wherein said supply means (19, 20; 19") include a mixing head (20) and a transfer unit (19; 19") that are reciprocally couplable, said transfer unit (19; 19") being provided with a self-cleaning conduit and being configured to receive from said mixing head (20) a dose of said polymer-reagent mixture to be transferred to said supply channel (22).

31. Injection moulding method for manufacturing a product (2) by injecting a liquid or semiliquid material that is intended to solidify, comprising the steps of:
- providing an injection moulding apparatus (1; 1'; 1") including at least two moulding units (6, 7; 6', 7'; 6", 7") defining a moulding cavity (12; 12'; 12") to form said product (2), wherein mould-parts (7; 7'; 7") of one of said at least two moulding units (6, 7; 6', 7'; 6", 7"), comprise:
- a central moulding body (8a, 8b; 8a', 8b'; 8a", 8b"),
- hollow moulding means (9a, 9b; 9a', 9b'; 9a", 9b") arranged around said central moulding body (8a, 8b; 8a', 8b'; 8a", 8b") and defining together with said central moulding body (8a, 8b; 8a', 8b'; 8a", 8b") an annular supply gap (11; 11'; 11"),
- a sleeve body (10a; 10a'; 10a") that is movable within said annular supply gap (11; 11'; 11");
the method further comprising the steps of:
- moving said central moulding body (8a, 8b; 8a', 8b'; 8a", 8b") in a controlled manner;
- moving said hollow moulding means (9a, 9b; 9a', 9b'; 9a", 9b") in a controlled manner;
- moving said sleeve body (10a; 10a'; 10a") in a controlled manner to push a dose of said material into said moulding cavity (12; 12'; 12") and maintaining said dose in a mutually clamped condition until said material solidifies;
**characterised in that** said central moulding body (8a, 8b; 8a', 8b'; 8a", 8b") is moved along said longitudinal axis (X) independently of the movement of said hollow moulding means (9a, 9b; 9a', 9b'; 9a", 9b") and of the movement of said sleeve body (10a; 10a'; 10a").

32. Injection moulding method according to claim 31, wherein said material comprises aluminium intended for melting.

33. Injection moulding method according to claim 31, wherein said material comprises a polymer-reagent mixture.

34. Injection moulding method according to any one of claims 31 to 33, cyclically comprising the steps of:
- supplying to said injection moulding apparatus (1; 1'; 1") an insert (3) to be included in said product (2),
- supplying said material to said annular supply gap (11; 11'; 11")
- coupling said at least two moulding units (6, 7; 6', 7'; 6", 7") with said insert (3) to form said moulding cavity (12; 12'; 12"),
- injecting said material into said moulding cavity (12; 12'; 12") to form said product (2),
- reciprocally decoupling said at least two moulding units (6, 7; 6', 7'; 6", 7"),
- unloading said product (2).

35. Injection moulding method according to claim 34, wherein said insert (3) is positioned at a moulding element (9b; 9b'; 9b") of said hollow moulding means (9a, 9b; 9a', 9b'; 9a", 9b").

36. Injection moulding method according to claim 34 or 35, wherein said coupling said at least two moulding units (6, 7; 6', 7'; 6", 7") with said insert (3) provides for maintaining in a mutually clamped condition said at least two moulding units (6, 7; 6', 7'; 6", 7") and bringing said moulding element (9b; 9b'; 9b") near a further moulding element (9a; 9a'; 9a") of said hollow moulding means (9a, 9b; 9a', 9b'; 9a", 9b"), and wherein said step of decoupling said at least two moulding units (6, 7; 6', 7'; 6", 7") provides for moving away said moulding element (9b; 9b'; 9b") from said further moulding element (9a; 9a'; 9a").

37. Injection moulding method according to one of claims 34 to 36, further comprising the steps of supplying a rotating table body (1a), and wherein said coupling said at least two moulding units (6, 7; 6', 7'; 6", 7") comprises rotating said table body (1a) to align said half mould (7; 7'; 7") longitudinally.

38. Injection moulding method according to one of claims 34 to 37, wherein a step of engaging half mould movement means (8c, 8d, 10c, 10d) with said parts (7; 7'; 7") of moulding units and a step of disengaging said half mould movement means (8c, 8d, 10c, 10d) from said parts (7; 7'; 7") is provided for.

39. Injection moulding method according to one of claims 32 to 36, wherein said step of coupling said at least two moulding units (6, 7; 6', 7'; 6", 7") with said insert (3) comprises bringing said central moulding body (8a, 8b; 8a', 8b'; 8a", 8b") near said insert (3) and said step of decoupling said at least two moulding units (6, 7; 6', 7'; 6", 7") provides for moving said central moulding body (8a, 8b; 8a', 8b'; 8a", 8b") away from said insert (3).

40. Injection moulding method according to one of claims 32 to 37, wherein after said unloading said product (2) and before supplying said insert (3) and/or before said supplying said material a step of lubricating said at least two moulding units (6, 7; 6', 7'; 6", 7") is provided for.

41. Injection moulding method according to one of claims 31 to 40, wherein there is provided for a thermal conditioning step - by means of a controlled flow of a thermal conditioning liquid - of said central moulding body (8a, 8b; 8a', 8b'; 8a", 8b"), said hollow moulding means (9a, 9b; 9a', 9b'; 9a", 9b") and said sleeve body (10a; 10a'; 10a").

42. Injection moulding method according to claim 41, wherein said thermal conditioning liquid comprises a lubricating liquid.

43. Injection moulding method according to claim 40 or 41, wherein said thermal conditioning step is performed by controlling the temperature of said central moulding body (8a, 8b; 8a', 8b'; 8a", 8b"), of said hollow moulding means (9a, 9b; 9a', 9b'; 9a", 9b") and of said sleeve body (10a; 10a'; 10a") so as to maintain the dimensional tolerance of each of said central moulding body (8a, 8b; 8a', 8b'; 8a", 8b"), each said hollow moulding means (9a, 9b; 9a', 9b'; 9a", 9b") and each said sleeve body (10a; 10a'; 10a") being comprised in the range -0.2 and +0.2 mm.

44. Injection moulding method according to any one of claims 33 to 41 as appended to claim 31, wherein a vacuum degree is generated inside said moulding cavity (12'; 12") before, and/or during said supplying of said polymeric material to said annular supply gap (11'; 11").
